(19) Europäisches Patentamt / European Patent Office / Office européen des brevets

(11) **EP 2 738 660 A2**

(12) **EUROPEAN PATENT APPLICATION**

(43) Date of publication:
**04.06.2014 Bulletin 2014/23**

(51) Int Cl.:
**G06F 3/0488** (2013.01)      **G06F 3/0482** (2013.01)
**G06F 9/44** (2006.01)

(21) Application number: **13194644.4**

(22) Date of filing: **27.11.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **28.11.2012   KR 20120135840**

(71) Applicant: **Samsung Electronics Co., Ltd Gyeonggi-do 443-742 (KR)**

(72) Inventors:
• **Ahn, Won-Ick**
  **Gyeonggi-do (KR)**
• **Suh, Suk-Won**
  **Gyeonggi-do (KR)**
• **Jeong, Bong-Soo**
  **Gyeonggi-do (KR)**
• **Cho, Doo-Soon**
  **Seoul (KR)**

(74) Representative: **Nederlandsch Octrooibureau P.O. Box 29720 2502 LS The Hague (NL)**

(54)    **Method for providing user interface based on physical engine and an electronic device thereof**

(57)    A method for operating an electronic device is provided. The method includes setting a virtual physical field in at least one region in a screen, mapping a UI object to be displayed in the at least one region to at least one virtual physical object in the physical field, assigning a physical attribute to the at least one virtual physical object, determining a state of the at least one physical object on the basis of the physical field and the physical attribute of the UI object by using a physical engine, the state including at least one of a location, a form, a shape, and a color, and displaying the UI object according to the state of the at least one virtual physical object.

FIG.9A

FIG.9B

EP 2 738 660 A2

FIG.9C

**Description**

## TECHNICAL FIELD

The present disclosure relates to a User Interface (UI) of an electronic device and the electronic device thereof.

## BACKGROUND

With the ongoing developments related to the physical performance of mobile devices, a realistic UI, which has been difficult to implement, is now being implemented in practice. Due to hardware performance improvements, the UI sector is now entering an era in which UIs are competing as they can be used with applications which appeal to a user's natural intuition. This era is beyond the era in which competition was focused on UIs designed to support various functions and high speed capability. An existing mobile UI framework provides an environment in which a developer can develop an application under the guidance of a UI designer, and an existing UI can provide a screen transition effect and a visual effect of each of various screen elements.

A typical mobile UI framework has the following structure. An element required for the mobile UI framework includes a graphic rendering module and a window manager module. The graphic rendering module serves for drawing of basic graphic elements, such as an image, a text, a line, or the like. The graphic rendering module may perform rendering on a frame buffer by using only software, or may perform rendering by using a hardware acceleration graphic function. One example of Application Program Interfaces (APIs) widely used to support a high-resolution display in a mobile device is Open Graphics Library for Embedded Systems (OpenGL|ES) 1.x or 2.0. The OpenGL|ES supports 2-Dimension (2D) and 3-Dimension (3D) graphic acceleration, and provides a control function based on raster graphics for individual pixels. For hardware acceleration, some hardware systems may support only alpha blending and overlay. The window manager module performs a function of processing an animation, a window management, a screen layout, a user input process, or the like. The window manager module is coupled to the graphic rendering module to present a UI element in a display element. In particular, with the increasing demand for realistic animation, instead of implementing animation by directly changing coordinates of the animation, the window manager module provides a function for dividing each of objects by a layer and for presenting animations through automatic composition when a layer attribute changes.

In general, the mobile UI framework provides frequently used functions such as a label, a list, an edit field, an icon, a button, a date and time, a slide, or the like, in a control screen and in widget form. Most controls are displayed and controlled in a screen by setting basic attributes so as to provide necessary functions. A screen layout function, such as that provided in an android platform, or the like, provides a function for arranging the aforementioned controls at proper positions. The screen layout may be assigned a layout attribute, such as a linear layout, a relative layout, a table layout, or the like. In addition, a resource fallback and a virtual coordinate system may be used to support various resolutions by using one implementation code.

The existing UI framework described above calculates a position of a UL object by using a nonlinear polynomial function or a trigonometric function which uses a time parameter to show smooth and natural motions. In embodiments, the UI framework calculates positions of all UI objects by applying equations which guarantee motions recognizable by a user in a most comfortable manner. However, this method must provide a start point and a destination point for every UI object, and requires a lot of trial-errors for calculation and implementation. In addition, since an effect based on a motion of the UI object is also implemented by using the aforementioned method, it is difficult to provide various mortifications due to time and cost problems. In embodiments, when an arranged UI object is moved by touch and dragging, an animation for filling empty space remains the same. Further, it is difficult to apply changes considering all of a direction of moving a user's finger, a velocity thereof, and the motions of different items depending on the motion of the object to be changed. Furthermore, when an additional process is performed in an exceptional situation, for example, in which the UI object collides with another object while moving on a designated path, many additional scenarios, animations, or the like, must be considered for implementation. That is, not only are significant amounts of time and effort required for UI configuration, but only an artificially determined scenario is considered, which results in a problem whereby an unnatural animation is produced.

Therefore, a need exists for an apparatus and related method employing a physical engine for a more natural UI in an electronic device.

## SUMMARY

Aspects of the present disclosure are to address at least the above-mentioned problems and/or disadvantages and to provide at least the advantages described below. Accordingly, an aspect of the present disclosure is to provide an apparatus and method for providing a natural User Interface (UI) in an electronic device.

Another aspect of the present disclosure is to provide an apparatus and method for providing a motion of a more user-friendly UI object in an electronic device.

Another aspect of the present disclosure is to provide an apparatus and method for presenting a change of a UI by using a physical engine in an electronic device.

In accordance with a first aspect of the present disclosure, a method of operating an electronic device is provided. The method includes setting a virtual physical field in at least one region in a screen, mapping a UI object to be displayed in the at least one region to at least one virtual physical object in the physical field, assigning a physical attribute to the at least one virtual physical object, determining a state of the at least one physical object on the basis of the physical field and the physical attribute of the UI object by using a physical engine, the state including at least one of a location, a form, a shape, and a color, and displaying the UI object according to the state of the at least one virtual physical object.

In accordance with a second aspect of the present disclosure, an electronic device is provided. The electronic device includes at least one processor configured to set a virtual physical field in at least one region in a screen, to map a UI object to be displayed in the at least one region to at least one virtual physical object in the physical field, to assign a physical attribute to the at least one virtual physical object, and to determine a state of the at least one physical object on the basis of the physical field and the physical attribute of the UI object by using a physical engine, and a display unit for displaying the UI object according to the state of the at least one virtual physical object, wherein the state includes at least one of a location, a form, a shape, and a color.

In accordance with a third aspect of the present disclosure, an electronic device is provided. The electronic device includes at least one processor, a display unit configured to display a visual output under the control of the at least one processor, and at least one module stored in a memory and configured to be executed by the at least one processor The module may include at least one instruction for setting a virtual physical field in at least one region in a screen, for mapping a UI object to be displayed in the at least one region to at least one virtual physical object in the physical field, for assigning a physical attribute to the at least one virtual physical object, for determining a state of the at least one physical object on the basis of the physical field and the physical attribute of the UI object by using a physical engine, and for displaying the UI object according to the state of the at least one virtual physical object.

Other aspects, advantages, and salient features of the disclosure will become apparent to those skilled in the art from the following detailed description, which, taken in conjunction with the annexed drawings, discloses various embodiments of the present disclosure.

## BRIEF DESCRIPTION OF THE DRAWINGS

The above and other aspects, features and advantages of certain embodiments of the present disclosure will be more apparent from the following description taken in conjunction with the accompanying drawings, in which:

FIG. 1 illustrates an electronic device according to an embodiment of the present disclosure;

FIG. 2 illustrates a buoyancy field according to an embodiment of the present disclosure;

FIG. 3 illustrates a physical object located in a virtual physical space according to an embodiment of the present disclosure;

FIG. 4 illustrates a process of operating an electronic device according to an embodiment of the present disclosure;

FIG. 5 is a block diagram of an electronic device according to an embodiment of the present disclosure;

FIG. 6 is a block diagram of an electronic device according to an embodiment of the present disclosure;

FIG. 7 is a block diagram of an electronic device according to an embodiment of the present disclosure;

FIG. 8 is a block diagram of an electronic device according to an embodiment of the present disclosure;

FIGS. 9A, 9B and 9C illustrate an icon movement of a menu screen in an electronic device according to an embodiment of the present disclosure;

FIG. 10 illustrates a density distribution for an icon movement of a menu screen in an electronic device according to an embodiment of the present disclosure;

FIGS. 11A, 11B and 11B illustrate a movement of an indicator of a menu screen in an electronic device according to an embodiment of the present disclosure;

FIGS. 12A and 12B illustrate examples of configuring a physical object for an indicator in an electronic device according to an embodiment of the present disclosure;

FIG. 13 illustrates a menu screen based on a gravity field in an electronic device according to an embodiment of the present disclosure;

FIG. 14 illustrates configuring a physical object for an icon in a menu screen based on a gravity field in an electronic device according to an embodiment of the present disclosure;

FIG. 15 illustrates a collision of a physical object in an electronic device according to an embodiment of the present disclosure;

FIG. 16 illustrates a movement of a physical object which floats on a liquid in an electronic device according to an embodiment of the present disclosure;

FIG. 17 illustrates a security keyboard in an electronic device according to an embodiment of the present disclosure;

FIGS. 18A and 18B illustrate implementing a security keyboard in an electronic device according to an embodiment of the present disclosure;

FIGS. 19A and 19B illustrate an Access Point (AP) search screen in an electronic device according to an embodiment of the present disclosure;

FIG. 20 illustrates a process of converting signal strength to a position of an AP icon in an electronic device according to an embodiment of the present disclosure;

FIG. 21 illustrates a relation of a density of a physical object for an AP and a force acting thereon in an electronic device according to an embodiment of the present disclosure;

FIG. 22 illustrates modeling for avoiding a simple harmonic oscillation of a physical object for an AP in an electronic device according to an embodiment of the present disclosure;

FIGS. 23A, 23B and 23C illustrate a locking screen in an electronic device according to an embodiment of the present disclosure;

FIGS. 24A and 24B illustrate a collision between a curtain and a rigid body which constitute a locking screen in an electronic device according to an embodiment of the present disclosure;

FIG. 25 illustrates a motion of a curtain constituting a locking screen in an electronic device according to an embodiment of the present disclosure;

FIGS. 26A and 26B illustrate a release of a locking screen in an electronic device according to an embodiment of the present disclosure;

FIG. 27 illustrates a UI object grouping on the basis of physical attribute mapping in an electronic device according to an embodiment of the present disclosure; and

FIG. 28 illustrates a notification UI in an electronic device according to an embodiment of the present disclosure.

Throughout the drawings, it should be noted that like reference numbers are used to depict the same or similar elements, features, and structures.

## DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

Hereinafter, the present disclosure describes a technique for providing a natural User Interface (UI) based on a physical engine in an electronic device. In the present disclosure, the electronic device may be a portable electronic device, and may be one of a smart phone, a portable terminal, a mobile phone, a mobile pad, a media player, a tablet computer, a handheld computer, and a Personal Digital Assistant (PDA), or the like. In addition, the electronic device may be a device which combines two or more functions of the aforementioned devices.

The present disclosure relates to a Graphic User Interface (GUI) provided in a smart phone, a Portable Media Player (PMP), a digital camera, a Personal Computer (PC), a notebook, a table PC, a Television (TV), a console, a game machine, a portable game machine, or the like. The present disclosure provides a user-friendly, natural UI by applying an effect as if UI objects move in a physical world.

A UI framework based on a physical engine shows a motion similar to reality, and thus there is an advantage in that a UI can be modified in a visually user-friendly manner. In addition, unlike the conventional technique, it has an advantage in that a graphic effect is automatically generated since GUI elements automatically perform a coordinate movement, a size change, a rotation, a shape change, a collision effect, or the like, in a UI operation.

Accordingly, by using a UI framework which does not require a start point, a destination point, or complex exception handling, while providing a motion, the present disclosure can remove an unnatural motion caused by an exceptional situation and show a natural response based on a user's intention or input, unlike the conventional technique.

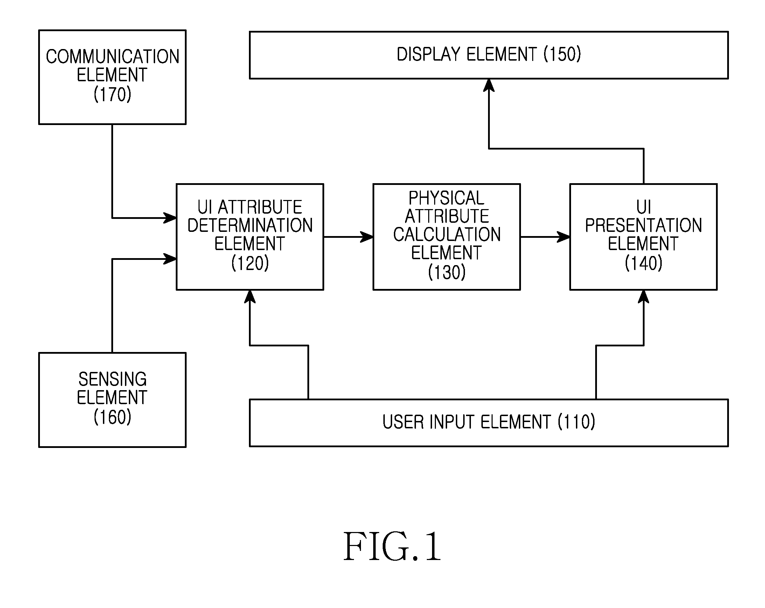

FIG. 1 illustrates an electronic device according to an embodiment of the present disclosure.

Referring to FIG. 1, for the embodiment of the present disclosure, the electronic device includes a user input element 110, a UI attribute determination element 120, a physical attribute calculation element 130, a UI presentation element 140, and a display element 150. In addition, the electronic device may further include a sensing element 160 and a communication element 170.

The user input element 110 is an information input device which receives a user input. In embodiments, the user input element 110 includes at least one of a touch screen, a mouse, a keyboard, a stylus pen, a joystick, a virtual keypad, a keypad, and a click wheel. The user input element 110 receives a signal of a coordinate, a motion, a gesture, focusing, hovering, dragging, a click, a double-click, a tap, a double-tap, a tap&hold, or the like, and delivers the received signal to the physical attribute calculation element 130, the UI attribute determination element 120, and the UI presentation element 140.

The UI attribute determination element 120 assigns one or more attributes to each of physical objects mapped to respective UI objects belonging to a UI, and determines an attribute value. In embodiments, the UI object implies each GUI element such as a window, a menu, an icon, a widget, an image, a button, a key, a text, a list, an item, a progressive bar, a layout, or the like. In addition, the attribute implies a position, a size, a density, a volume, a color, an elasticity, a viscosity, a strain, a velocity, a vector, or the like. Specifically, it is optional to determine the attribute value basically according to a position of the GUI element, a relative distance on a display, or the like. The attribute and the attribute value can be changed depending on a user input through the user input element 110.

The physical attribute calculation element 130 computes and provides a material property effect of the UI object on the basis of an attribute of each GUI element. The material property effect includes movement, mortification, collision, agglomeration, brokenness, fluttering, or the like. The physical attribute calculation element 130 includes a physical engine or a physical computation engine. The physical engine or the physical computation engine implies a program for simulating a Newtonian mechanics model using a numerical value such as a mass, a velocity, a friction, a fluid resistance, or the like, with respect to objects in a space, a device for storing the program, or a device for executing the program. In embodiments, the physical engine or the physical computation engine logically constitutes a Newtonian mechanics space, and calculates a physical phenomenon occurring in a space thereof. That is, the physical engine can be used to simulate rigid-body dynamics, soft-body dynamics, flexible dynamics, collision detection, particles, waves, fabrics, ragdoll shapes, or the like. The physical engine is generally used in computer graphics, video games, or movies, and is primarily used as middleware in the video games and is thus used in real-time simulation processing. In the present disclosure, the physical engine is used for UI object control of the electronic device.

The UI presentation element 140 graphically presents a GUI element in response to a user input or according to a material property effect of the GUI element, calculated by the physical attribute calculation element 130. In other words, the UI presentation element 140 generates graphic information.

The display element 150 presents the graphic information so that the user can recognize graphic information processed at the request of the user input element 110 or by the UI presentation element 140. In embodiments, the display element 150 may include an image output device such as a Liquid Crystal Display (LCD), Active Matrix Organic Light Emitting Diodes (AMOLED), Light Emitting Diodes (LED), a flexible display, a transparent display, a digital paper, a Cathode Ray Tube (CRT), a monitor, and a Television (TV), or the like.

The sensing element 160 measures a physical property imposed on the electronic device. In embodiments, the sensing element 160 may include a gyro sensor, a geomagnetic sensor, an accelerometer/angular velocity sensor, a camera, a proximity sensor, an ambient light sensor, or the like. A value measured by the sensing element 160 may be used to change a UI attribute. The sensing element 160 may be omitted according to a specific embodiment.

The communication element 170 may be used to share graphic information presented in an attribute value of the GUI element when interworking with another device connected through a network by means of the user input element 110 or the sensing element 160. In addition, the communication element 170 may detect signals of peripheral devices based on Wireless Fidelity (WiFi), Bluetooth, or the like. The communication element 170 may be omitted according to a specific embodiment.

Basic concept of the present disclosure can be summarized as follows.

The present disclosure uses a physical virtual environment having at least one of a gravity, a buoyancy, an electric force, and a magnetic force. In addition, the present disclosure may additionally use a viscosity, an elasticity, or the like. In the physical virtual environment, the UI object shows motion based on a more user-friendly physical phenomenon. The UI object is also designed according to the physical environment. Further, the present disclosure maps each UI object to at least one virtual physical object, and assigns a physical attribute to the virtual physical object. The virtual physical object is assigned an attribute according to a volume, a mass, or a shape which are possible in an actual 3D space. The virtual physical object may respond to a physical field of a virtual physical space and may be moved and changed according to an attribute value. Herein, the change implies that at least one of a form, a shape, and a color is changed. According to the movement/change of the virtual physical object mapped to the UI object, the UI object is also moved/changed. That is, the movement of all UI objects is determined based on a force, a velocity in response to momentum, or an acceleration.

The control of the UI object according to an embodiment of the present disclosure consists of a user input, a physical action based on the user input, a coordinate movement or change of a physical object mapped to the UI object based on the physical action, and a presentation of the UI object. The user input is converted to an external force of a physical environment corresponding to an input type and is then delivered to the physical engine. Thereafter, the physical engine performs physical simulation according to a specific time interval, that is, a synchronization interval, with respect to the external force, and outputs a state of the physical object based on a simulation result. Herein, the state includes a location, a form, a shape, a color, or the like. That is, the movement and change of the UI object are derived from a force (e.g., a gravity, a buoyancy, or the like.) exerted by a physical virtual environment and a force (e.g., a value determined based on a user input or an input caused by a sensor of a device) externally delivered, and finally are expressed as a calculation result obtained by the physical engine. The synchronization interval is preferably synchronized with a refresh rate of a display so as to be regulated not to have a difference between display and simulation operations.

Hereinafter, a UI framework using a gravity and a buoyancy will be described as an embodiment of the present disclosure.

The gravity is defined as a resultant force of universal gravitation and the centrifugal force caused by the Earth's rotation. That is, the gravity is a force that attracts an object located near an earth surface towards the center of the Earth, and is the most fundamental physical force exerted on an object on the Earth. All objects on the Earth are exerted upon by a force which is in proportion to a mass towards the center of the Earth. The buoyancy is defined as a force exerted by an object submerged in a fluid, such as water or air, in an opposite direction to the gravity due to a density difference to the fluid. The object submerged in the fluid is stationary at a point at which the gravity and the buoyancy are in equilibrium.

When a volume and a weight are assigned to a UI object in a virtual physical space in which gravity and buoyancy are determined, the gravity and the buoyancy act on the UI object. By using the equilibrium of the gravity and the buoyancy, the UI object can be naturally arranged or moved to a specific position of the virtual space.

As described above, the gravity and the buoyancy both act on the object submerged in the fluid. In this case, an equilibrium point of a force, that is, a point at which a force acting on the object becomes zero, can be controlled by regulating a density of the fluid and the object. The force acting on the object can be expressed by Equation (1) below.

$$F_{SUM} = F_B - F_G = V \times g \times (\rho_f - \rho_o) \qquad \ldots\ldots \text{Equation (1)}$$

In Equation (1) above, $F_{SUM}$ denotes a force exerted on an object, $F_B$ denotes a buoyancy exerted on the object, $F_G$ denotes a gravity exerted on the object, V denotes a volume of the object, g denotes a gravitational acceleration, $\rho_f$ denotes a density of fluid, and $\rho_o$ denotes a density of the object.

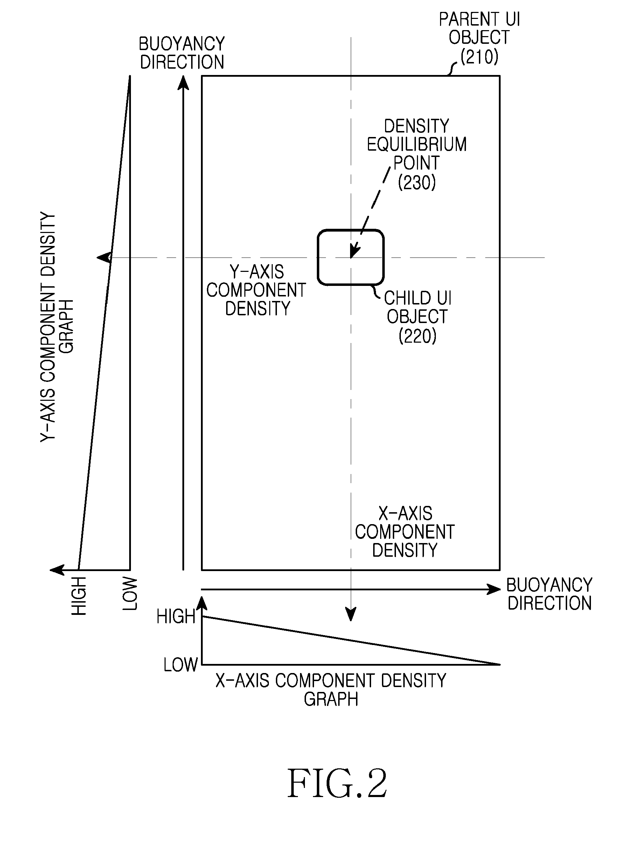

In general, respective icons are arranged on an orthogonal coordinate system in a grid form in the electronic device. A motion of the icon on a screen consists of an arrangement and movement of each UI object in a virtual physical space. When the density is assigned as an attribute of each UI object, the UI object can be controlled by using the gravity and the buoyancy. In embodiments, it is assumed that a screen consists of one parent window as a parent UI object which functions as a container, and icons consist of n child windows as a child UI object. In this case, a density attribute is assigned to each of the parent UI object and the child UI object. The parent UI object determines a buoyancy field in which a density value changes depending on a position, and the child UI object is assigned a single density value. If the density value of the child UI object is changed in a state of fixing the buoyancy of the parent UI object, the child UI object naturally moves according to a physical force caused by a buoyancy and gravity assigned to the parent UI object. Further, if another child UI object exists on a movement path of the child UI object, a natural screen effect may be more presented according to collision detection of a physical engine. An example of the buoyancy field according to the aforementioned embodiment will be described below with reference to FIG. 2.

FIG. 2 illustrates a buoyancy field according to an embodiment of the present disclosure.

Referring to FIG. 2, a parent UI object 210 has a buoyancy field independent of each of X and Y axes, and a density thereof changes depending on a coordinate value in each of the X and Y axes. In other words, the buoyancy field acting on a virtual physical space assigns each density attribute by separating an X-axis component and a Y-axis component, and the density value is defined as a first-order function relation. More specifically, in the X and Y axes of the parent UI object 210, the density increases in an opposite direction to a buoyancy direction. The child UI object 220 is present inside the parent UI object 210, and the child UI object 220 has a fixed X-axis density and a fixed Y-axis density. Accordingly, the child UI object 220 is located at a specific fixed point, i.e., at a density equilibrium point 230, on the parent UI object 210. According to the aforementioned principle, by changing X-axis component and Y-axis component density values of the child UI object 220, the child UI object 220 can be moved to a specific position on the parent UI object 210. In addition, the movement of the child UI object 220 based on the density change is simulated as a natural motion caused by a buoyancy by using a physical engine. The child UI object 220 moves while colliding with other UI objects according to the changed density value, and thus changes its position.

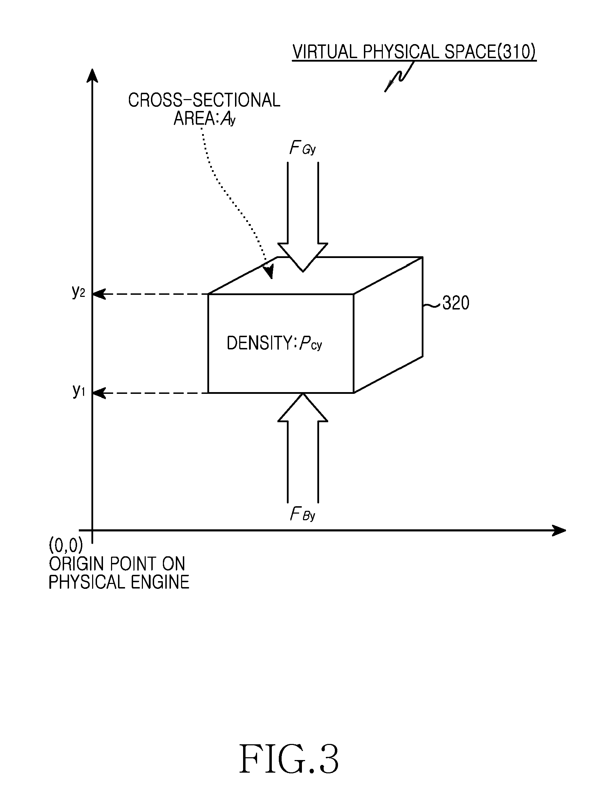

FIG. 3 illustrates a physical object located in a virtual physical space according to an embodiment of the present disclosure.

Referring to FIG. 3, the following equation is derived for a force exerted on the child UI object on the physical engine. Only a force of a Y-axis component is considered in FIG. 3. It is assumed in FIG. 3 that a child UI object 320 is a rectangular cuboid of which a cross-sectional area is $A_y$ and a height is h, and a density assigned to a virtual physical space 310 corresponding to a parent UI object is a function of y, i.e., $f_{\rho y}(y)$. Herein, it is assumed that an origin point is at a lower-left end on the physical engine, and a density value is a first-order function. Assume that the child UI object 320 is located such that a lower end is $y_1$ and an upper end is $y_2$, and a point at which the density of the child UI object 320 is equal to the density of the parent UI object 310 is $y_e$. In this case, Equation (2) below is satisfied.

$$\rho_{cy} = f_{\rho y}(y_e) \qquad \text{...... Equation (2)}$$

In Equation (2) above, $\rho_{cy}$ denotes a Y-axis density of the child UI object 320, $f_{\rho y}()$ denotes a function indicating the density assigned to the parent UI object 310, and $y_e$ denotes a Y-axis coordinate of a point at which the density of the child UI object 320 is equal to the density of the parent UI object 310.

In this case, a final force exerted on the child UI object 320 is calculated by the physical engine as shown in Equation (3) below.

$$F = F_B - F_G \qquad \text{...... Equation (3)}$$

In Equation (3) above, F denotes a final force exerted on the child UI object 320, $F_B$ denotes a buoyancy exerted on the child UI object 320, and $F_G$ denotes a gravity exerted on the child UI object 320.

Each force exerted on the child UI object 320 is expressed in detail by Equation (4) below.

$$F_{By} = A_y \times g \times \int_{y_1}^{y_e} f_{\rho y}(y) dy \quad (y_1 \leq y_e \leq y_2)$$

$$F_{By} = A_y \times g \times \int_{y_1}^{y_2} f_{\rho y}(y) dy \quad (y_e > y_2)$$

$$F_{By} = 0 \quad (y_e < y_1)$$

$$F_{Gy} = A_y \times (y_2 - y_1) \times \rho_{cy}$$

$$F_y = F_{By} - F_{Gy} \qquad \text{...... Equation (4)}$$

In Equation (4) above, $F_{By}$ denotes a Y-axis buoyancy exerted on the child UI object 320, $A_y$ denotes a cross-sectional area of the child UI object 320, g denotes a gravity acceleration, $f_{\rho y}()$ denotes a function indicating a density assigned to the parent UI object 310, $y_1$ denotes a Y-axis coordinate of a lower-end area of the child UI object 320, $y_2$ denotes a Y-axis coordinate of an upper-end area of the child UI object 320, $y_e$ denotes a Y-axis coordinate of a point at which the density of the child UI object 320 is equal to the density of the parent UI object 310, $F_{Gy}$ denotes a Y-axis gravity exerted on the child UI object 320, $\rho_{cy}$ denotes a Y-axis density of the child UI object 320, and $F_y$ denotes an overall Y-axis force exerted on the child UI object 320.

Although Equation (4) above shows only Y-axis forces, it is also possible to calculate forces exerted on the child UI object 320 by applying the same equation to the X-axis. However, for independent UI object controls of the X-axis and the Y-axis, a physical property of the parent UI object 310 is determined independent of the X-axis and the Y-axis.

On the basis of the force exerted on the child UI object calculated as described above, a motion of the child UI object can be calculated. The motion calculation can be performed by the physical engine. A UI presentation element receives information on a motion calculated with a specific time interval according to a determined period from the physical engine, and renders the child UI object. In other words, movement coordinate values based on a time flow of the child UI object may be obtained by using the physical engine, and a UI object is drawn at positions of the coordinate values. An object determined in a virtual physical space is shown to a user by being mapped to a UI object on a screen of the electronic device.

To implement the present disclosure, any existing physical engine can be adopted. In embodiments, a well-known physical engine such as box2d, bullet physics, chipmunk-physics engine, havok physics, Newton dynamics, WOW-Engine, JigLibFlash, or the like, can be used as a physical attribute calculation element of the present disclosure.

Hereinafter, an operation and structure of an electronic device for controlling a UI object as described above will be described in detail with reference to the accompanying drawings.

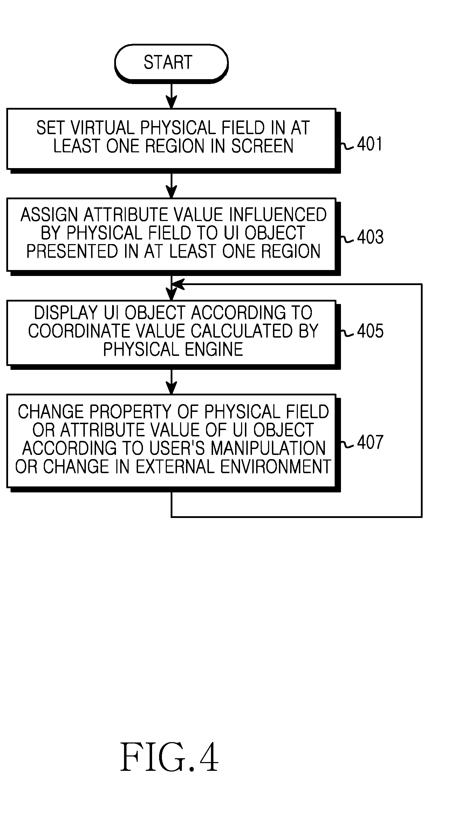

FIG. 4 illustrates a process of operating an electronic device according to an embodiment of the present disclosure.

Referring to FIG. 4, the electronic device sets a virtual physical field in at least one region in a screen at operation 401. A range and the number of the at least one region in which the physical field is set may vary depending on an application to be executed. The physical field is a virtual space to which a physical property is assigned, and corresponds to a parent UI object. In embodiments, the physical property may include at least one of a buoyancy, a gravity, an elasticity, a magnetism, an electric force, and a magnetic force. In addition, the physical field may be set independent of each axis in the virtual physical space. In embodiments, when a UI object moves in a 2D coordinate system consisting of an X-axis and a Y-axis, the physical field is set independent of each of the X-axis and the Y-axis. In addition, the physical field has attribute values which vary depending on a position in one axis. In embodiments, as illustrated in FIG. 2, a density value of the X-axis and the Y-axis changes in a form of a first-order function.

At operation 403, the electronic device assigns at least one physical attribute to at least one UI object presented in the at least one region, and determines an attribute value. More specifically, the electronic device maps each UI object to at least one virtual physical object, assigns at least one physical attribute to the virtual physical object, and determines at least one attribute value. In this case, a physical attribute assigned to the at least one UI object is an attribute influenced by a property of the physical field. In embodiments, the physical attribute includes at least one of a size, a density, a volume, a form, a shape, a color, an elasticity, a viscosity, a strain, a motion velocity, a motion vector, an electric force, and a magnetic force. In embodiments, if the property of the physical field is the gravity and the buoyancy, the attribute assigned to the UI object may be a density, an area, or the like. In this case, the position in the physical field of the UI object is determined according to the attribute. Accordingly, the electronic device determines an initial position of the at least one UI object, and determines an attribute value corresponding to the initial position.

At operation 405, the electronic device displays the at least one UI object according to a coordinate value calculated by the physical engine. That is, the electronic device calculates a position of a UI object in the physical field based on a property of the physical field and based on attribute values of respective UI objects using the physical engine, and presents the UI objects at the calculated position. The position of the UI objects is calculated by the physical engine. In addition, the physical engine can be used to calculate not only the position of the at least one UI object, but also other states. In embodiments, if the at least one UI object is shrinkable, a shape of the UI object can be calculated. In addition, if a physical field that can have an influence on the shape and color of the UI object is set, the shape and color of the UI object can also be calculated. That is, the electronic device determines at least one of the position, the form, the shape, and the color of the at least one UI object by using the physical engine.

At operation 407, the electronic device changes the property of the physical field and the attribute value of the UI object according to a user's manipulation or a change in an external environment. The user's manipulation implies a key input, a touch input, or the like, which is input by means of a user input element. The change in the external environment implies a change of a physical environment imposed on the electronic device, such as a rotation, a movement, a direction, or the like, and a signal strength from an external communication device. That is, if there is a need to move a specific UI object, the electronic device changes an attribute value of the UI object to an attribute value corresponding to a destination point. In embodiments, if the specific UI object moves by a user's command, and a different UI object needs to fill an empty place generated due to the movement of the specific UI object, the electronic device changes an attribute value of the different UI object to an attribute value corresponding to the empty place. In embodiments, if the electronic device is tilted to the left or the right, the electronic device can change a direction of gravity and buoyancy assigned to the physical field so that the direction is parallel to an actual gravity direction.

Subsequently, returning to step 405, the electronic device displays the at least one UI object according to a coordinate value calculated by the physical engine. In this case, since the attribute value of the UI object or a property of the physical field is changed at operation 407, a current position of the UI object cannot be maintained, and is moved towards a position corresponding to the attribute value. Therefore, each position on a movement path of the UI object is calculated on a specific time basis by using the physical engine. Accordingly, the electronic device can present a change, a movement, a rotation, or the like, of the UI object without having to use a pre-defined animation. In this case, if UI objects are configured with a possibility of collision, the electronic device may calculate a change and movement of the UI objects caused by a collision on the basis of an elasticity, mass, or the like, of each UI object, and may present a form of the collision. In addition, if the UI objects are configured with a possibility of shrinkage, the electronic device may calculate a change in the UI object on the basis of a ductility, an elasticity, or the like, of the UI objects, and may present a form of the shrinkage.

The method described above in relation with FIG. X under of the present invention may be provided as one or more instructions in one or more software modules, or computer programs stored in an electronic device including a portable terminal.

Although not shown in FIG. 4, the electronic device repeats at operations 405 and 407 until a corresponding application ends.

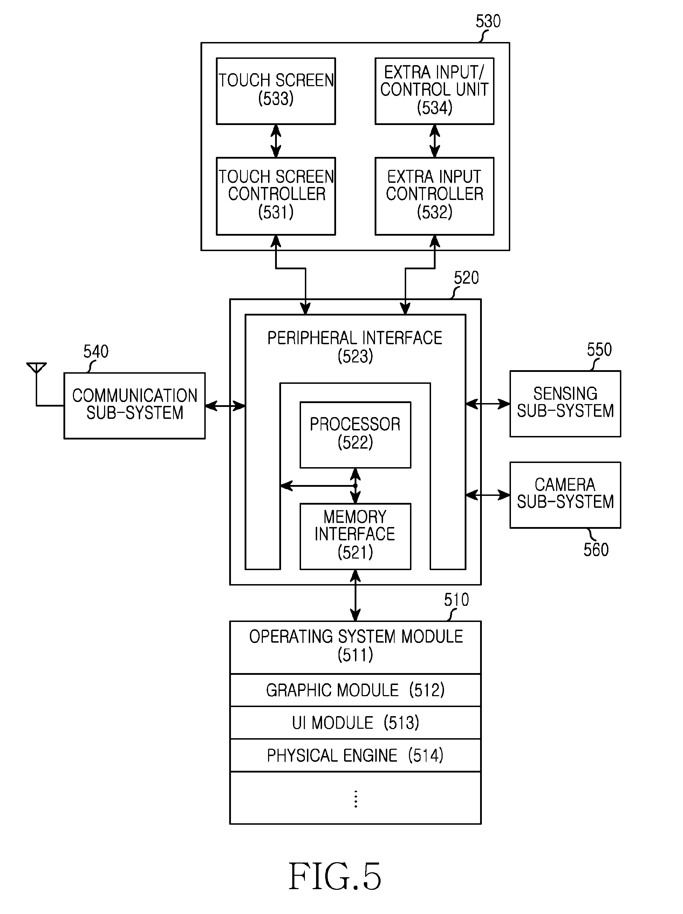

FIG. 5 is a block diagram of an electronic device according to an embodiment of the present disclosure. The present invention may be implemented in an electronic device including a portable terminal such as, for example, a smart phone and a mobile telecommunication terminal. Hereunder, a portable terminal is used as an example for the electronic device.

Referring to FIG. 5, the electronic device includes a memory 510, a processor unit 520, and an Input Output (IO) system 530. The memory 510 may be plural in number. In addition, according to an embodiment, the electronic device may further include at least one of a communication sub-system 540, a sensing sub-system 550, and a camera sub-system 560. The elements of the electronic device of FIG. 5 may be coupled by means of at least one communication bus (its reference numeral is not shown) or stream line (its reference numeral is not shown).

The memory 510 may be coupled to a memory interface 521. The memory 510 may include at least one of a fast random access memory such as one or more magnetic disc storage devices, a non-volatile memory, one or more optical storage devices, and a flash memory (e.g., a Negated AND-type flash memory [NAND], an inverted NAND-type memory [NOR], or the like). The memory 510 stores at least one software element. The software element may include an operating system module 511, a graphic module 512, a UI module 513, a physical engine 514, or the like. Herein, a module which is a software element may be expressed as a set of instructions, and the module may be referred to as an 'instruction set' or a 'program'.

The operating system program 511 includes at least one software element for controlling a general system operation. In embodiments, the operating system program 511 may be a built-in operating system such as WINDOWS, LINUX, Darwin, RTXC, UNIX, OS X, or VxWorks. In embodiments, the control of the general system operation includes memory management and control, storage hardware control and management, power control and management, or the like. The operating system module 511 performs a function for facilitating communication between at least one hardware element and at least one software element. The graphic module 512 includes at least one software element for providing and displaying a graphic on a touch screen 533. Herein, the graphic includes a text, a web page, an icon, a digital image, a video, an animation, or the like.

The UI module 513 includes at least one software element related to the UI. An aspect related to the UI includes contents regarding how a state of the UI is changed or in what condition the UI state is changed, or the like. In particular, according to an embodiment of the present disclosure, the UI module 513 includes a software element for setting a physical field in at least one region in a screen, for assigning a physical property of the physical field, and for determining a property value. In addition, the UI module 513 includes a software element for assigning a physical attribute, which is under influence of the physical field, to each of UI objects in the physical field, and for determining an attribute value. Further, the UI module 513 includes a software element for changing a property of the physical field and an attribute value of each UI object according to a user's manipulation or a change in an external environment.

The physical engine 514 includes at least one software element for calculating a position and state change of each UI object on the basis of an input property value of the physical field. The state change includes a shrinkage/enlargement, rotation, or the like. Further, the physical engine 514 includes at least one software element for providing a value indicating the calculated position coordinate and state.

The memory 510 may include an additional module in addition to the aforementioned modules 511 to 514. Alternatively, according to another embodiment of the present disclosure, some of the aforementioned modules 511 to 514 may be excluded.

The processor unit 520 includes the memory interface 521, a processor 522, and a peripheral interface 523. The processor 522 may include at least one hardware chip. The processor unit 520 may be collectively called a 'processor'. The memory interface 521, the processor 522, and the peripheral interface 523 may be separate elements or may be constructed with at least one integrated circuit.

The processor 522 executes a software program to allow the electronic device to perform a function corresponding to the software program, and processes and controls voice communication and data communication. Further, the processor 522 may perform an operation for graphic presentation by using a function defined for graphic processing. A separate chipset may be configured for the operation for graphic presentation, which can be called as a graphic chipset. That is, in addition to the processor 522, a graphic chipset having functions defined specifically for the graphic processing may be included. However, the graphic chipset may be a part of the processor 522.

In addition, the processor 522 executes a software module stored in the memory 510 to perform a specific function corresponding to the module. That is, the processor 522 interworks with software modules stored in the memory 510 to perform the method according to the embodiment of the present disclosure. The processor 522 may include at least one data processor and image processor. The data processor and the image processor may be configured with separate hardware entities. In addition, the processor 522 may be configured with a plurality of processors for performing different functions.

The peripheral device interface 523 couples the IO system 530 of the electronic device and at least one peripheral device to the processor 521 and the memory 510. The memory 510 may be coupled through the memory interface 521. That is, the memory interface 521 provides an interface for accessing to the memory 510.

The communication sub-system 540 provides an interface for wireless communication. The communication sub-system 540 may include at least one of a Radio Frequency (RF) receiver/transmitter and an optical (e.g., infrared ray) receiver/transmitter. The communication sub-system 540 may include a plurality of communication devices conforming to different protocols.

The IO system 530 may include the touch screen controller 531, an extra input controller 532, a touch screen 533, and an extra input/control unit 534. The touch screen controller 531 may be coupled to the touch screen 533. The touch screen 533 and the touch screen controller 531 are not limited thereto, and thus can use not only capacitive, resistive, infrared ray, and surface acoustic wave techniques for determining at least one contact point on the touch screen 533 but also a multi-touch sensing technique including extra proximity sensor arrangement or extra elements, so as to detect a contact, a motion, an interruption of the contact or the motion. The extra input controller 532 may be coupled to the extra input/control unit 534. An up/down button for at least one volume control may be included in the extra input/control unit 534. In addition, the button may have a form of a push button or a pointer device such as a rocker button, a rocker switch, a thumb-wheel, a dial, a stick, a stylus, or the like.

The touch screen 533 provides an I/O interface between the electronic device and a user. That is, the touch screen 533 delivers a touch input of the user to the electronic device. In addition, the touch screen 533 is a medium which shows an output from the electronic device to the user. Therefore, the touch screen 533 may be referred to as a display unit. That is, the touch screen 533 shows a visual output to the user. The visual output is expressed in a form of a text, a graphic, a video, or a combination thereof. Various display elements may be used for the touch screen 533. In embodiments, although not limited thereto, the touch screen 533 may include at least one of a Liquid Crystal Display (LCD), a Light Emitting Diode (LED), a Light emitting Polymer Display (LPD), an Organic Light Emitting Diode (OLED), an Active Matrix Organic Light Emitting Diode (AMOLED), and a Flexible LED (FLED).

The sensing sub-system 550 detects an external stimulus. The sensing sub-system 550 may include at least one of an acceleration sensor, a gyro sensor, an optical sensor, a geomagnetic sensor, a Gravity (G)-sensor, a temperature sensor, a biosensor, and a position sensor. The optical sensor may be at least one of a Charged Coupled Device (CCD) and a Complementary Metal-Oxide Semiconductor (CMOS). The position sensor may be a Global Positioning System (GPS) module. The sensing sub-system 550 senses a motion, a light-beam, a tilt, a direction, or the like, and provides an electronic signal for indicating a sensing result. The sensing sub-system 550 may further include a block for interpreting an electronic signal for indicating the motion or the like.

The camera sub-system 560 may perform photographing, video recording, or the like. The camera sub-system 560 may include an optical sensor, a lens, or the like. That is, the camera sub-system 560 recognizes a light beam input through the lens by using the optical sensor, and digitizes an image recognized in the optical sensor into digital data.

Various functions of the electronic device according to the present disclosure may be executed by at least one stream processing, a hardware and software entity including an Application Specific Integrated Circuit (ASIC), or a combination thereof.

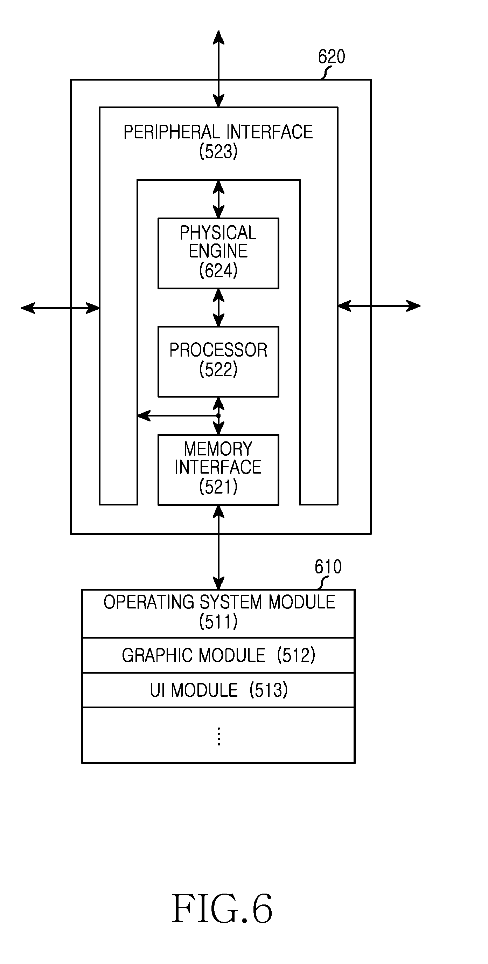

FIG. 6 is a block diagram of an electronic device according to an embodiment of the present disclosure. The present invention may be implemented in an electronic device including a portable terminal such as, for example, a smart phone and a mobile telecommunication terminal. Hereunder, a portable terminal is used as an example for the electronic device.

Referring to FIG. 6, another optional structure of the memory 510 and the processor unit 520 in the block diagram of FIG. 5 is illustrated.

Referring to FIG. 6, the electronic device includes a memory 610 and a processor unit 620. Although not shown in FIG. 6, the electronic device further includes the IO system 530 of FIG. 5. In addition, according to an embodiment, the electronic device may further include at least one of the communication sub-system 540, the sensing sub-system 550, and the camera sub-system 560.

The embodiment of FIG. 6 differs from the embodiment of FIG. 5 in a sense that the physical engine 514 included in the memory 510 is excluded, and a physical engine 624 is further included in the processor unit 620. That is, the physical engine 624 implemented in hardware in replacement of the physical engine 514 configured in software performs a function of the physical engine 514. That is, on the basis of a property value of a physical field and an attribute value of each UI object in the physical field, the physical engine 624 calculates a state change and a position of each UI object. Further, the physical engine 624 provides a value which indicates the calculated position coordinate and state.

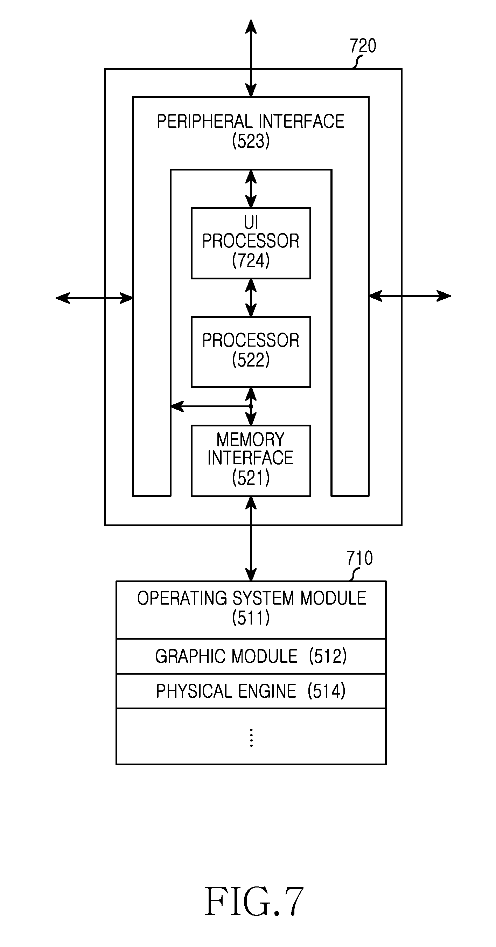

FIG. 7 is a block diagram of an electronic device according to an embodiment of the present disclosure. The present invention may be implemented in an electronic device including a portable terminal such as, for example, a smart phone and a mobile telecommunication terminal. Hereunder, a portable terminal is used as an example for the electronic device.

Referring to FIG. 7, another optional structure of the memory 510 and the processor unit 520 in the block diagram of FIG. 5 is illustrated.

Referring to FIG. 7, the electronic device includes a memory 710 and a processor unit 720. Although not shown in FIG. 7, the electronic device further includes the IO system 530 of FIG. 5. In addition, according to an embodiment, the electronic device may further include at least one of the communication sub-system 540, the sensing sub-system 550, and the camera sub-system 560.

The embodiment of FIG. 7 differs from the embodiment of FIG. 5 in a sense that the UI module 513 included in the memory 510 is excluded, and a UI processor 724 is further included in the processor unit 720. That is, the UI processor 724 implemented in hardware in replacement of the UI module 513 configured in software performs a function of the UI module 513. That is, the UI processor 724 sets a physical field in at least one region in a screen, assigns a physical property of the physical field, or determines a property value. Further, the UI processor 724 assigns a physical attribute, which is under influence of the physical field, to each of UI objects in the physical field, and determines an attribute value. Furthermore, the UI processor 724 changes a property of the physical field and an attribute value of each UI object according to a user's manipulation or a change in an external environment.

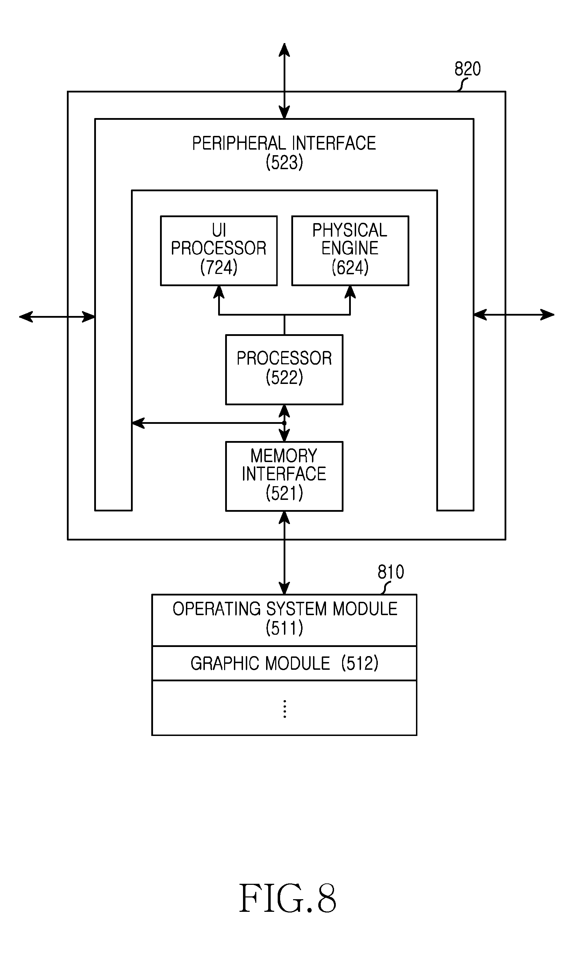

FIG. 8 is a block diagram of an electronic device according to an embodiment of the present disclosure. The present invention may be implemented in an electronic device including a portable terminal such as, for example, a smart phone and a mobile telecommunication terminal. Hereunder, a portable terminal is used as an example for the electronic device.

Referring to FIG. 8, another optional structure of the memory 510 and the processor unit 520 in the block diagram of FIG. 5 is illustrated.

Referring to FIG. 8, the electronic device includes a memory 810 and a processor unit 820. Although not shown in FIG. 8, the electronic device further includes the IO system 530 of FIG. 5. In addition, according to an embodiment, the electronic device may further include at least one of the communication sub-system 540, the sensing sub-system 550, and the camera sub-system 560.

The embodiment of FIG. 8 differs from the embodiment of FIG. 5 in a sense that the UI module 513 and the physical engine 514 included in the memory 510 are excluded, and the UI processor 724 of FIG. 7 and the physical engine 614 of FIG. 6 are further included in the processor unit 720. That is, the physical engine 624 implemented in hardware in replacement with the UI module 513 and the physical engine 514 implemented in software performs a function of the physical engine 514, and the UI processor 724 performs a function of the UI module 513.

Hereinafter, detailed examples of applying the present disclosure according to the aforementioned embodiments of the present disclosure will be described.

UI object control based on a physical engine according to an embodiment of the present disclosure is applicable to a menu screen editing UI.

In general, in a menu screen of a mobile device such as a smart phone, icons are arranged in a grid shape, and a UI is configured so that a user can easily execute a desired application. The user can change various menu environments according to a user's preference. In embodiments, the user selects an icon in a menu editing screen and then drags and drops the icon at a desired position, so as to change a position of the icon. In this case, according to a motion of the icon on the move, positions of the remaining other icons are automatically updated. In embodiments, in a case where a priority of an icon is decreased from an upper-left portion to a lower-right portion, if the user moves a specific icon to a specific position, icons which exist at next positions are re-arranged while their priories are decreased by one level.

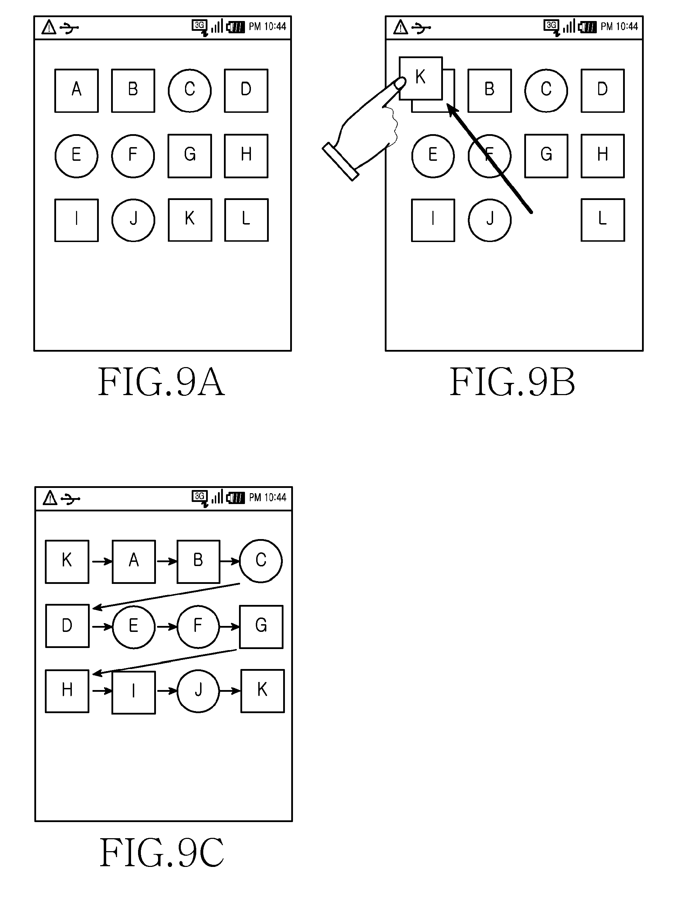

FIGS. 9A, 9B and 9C illustrate an icon movement of a menu screen in an electronic device according to an embodiment of the present disclosure.

Referring to FIGS. 9A, 9B and 9C, in a situation where a plurality of icons are arranged in a grid form as shown in FIG. 9A, and when the user moves an icon K to an upper-left portion as shown in FIG. 9B, the icon K is located at an upper-left position as shown in FIG. 9C, and icons A to J sequentially move.

In case of the conventional UI framework, in order to present a UI in which icons move as described above, a complex implementation is required by using a layout manager, an animation engine, or the like. In addition, the implementation is designed in a more complicated manner to support a horizontal/vertical screen transition function applied to most smart phones, and there are a lot of difficulties when the UI framework does not support the layout manager. However, if the menu editing screen is implemented by using the physical engine according to an embodiment of the present disclosure, the electronic device can provide more various and more natural menu editing functions without having to use complex functions based on the layout manager or the like.

An embodiment of the present disclosure for menu editing based on a physical engine is described below.

An electronic device according to an embodiment of the present disclosure implements a menu screen by utilizing an object control scheme based on a buoyancy. The electronic device determines buoyancy fields in a horizontal axis and a vertical axis in a virtual physical space, and determines a horizontal density value and vertical density value determined in an icon according to a destination position of each icon. Then, the respective icons move to the destination position through the physical engine while colliding with each other.

If the user moves a specific icon in the same manner in the menu editing screen, orders of the remaining icons must be automatically shifted by one level. In case of a UI framework based on the physical engine according to an embodiment of the present disclosure, the icon naturally moves to a destination point by changing a density value of the icon. That is, when the density value of the icon is changed, a magnitude of a force exerted on a UI object indicated by each icon is changed. When the change based on the force is calculated on a real-time basis through the physical engine, and is presented on a screen of the electronic device through a rendering engine, the user experiences a natural motion of the icon in the editing screen. That is, the natural motion of the icon can be presented by using only the physical engine without an aid of an animation engine.

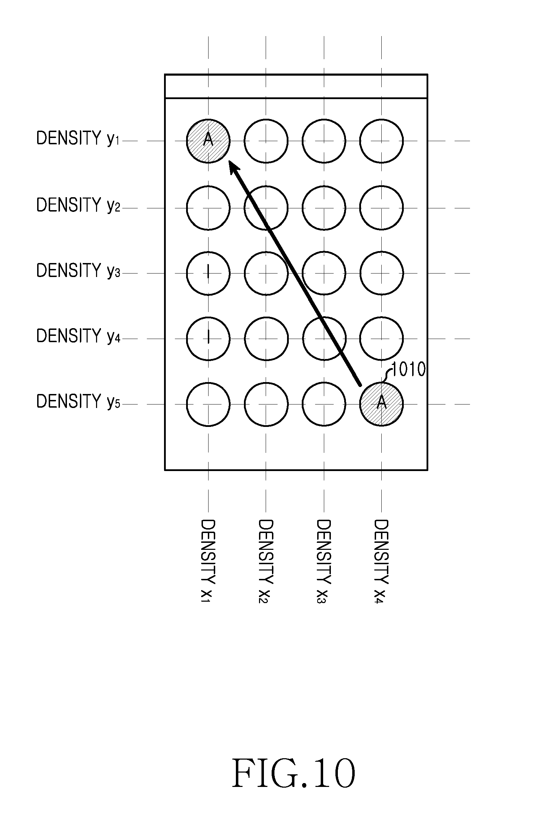

In embodiments, a menu screen based on a buoyancy may be as shown in FIG. 10.

FIG. 10 illustrates a density distribution for an icon movement of a menu screen in an electronic device according to an embodiment of the present disclosure.

Referring to FIG. 10, buoyancies are independently determined in a vertical axis (i.e., Y-axis) and a horizontal axis (i.e., X-axis), and a density of fluid in the buoyancy field is determined differently according to a position on the axis. Each icon has an X-axis density value and a Y-axis density value. A position of each icon is determined according to the X-axis density value and the Y-axis density value. An icon A 1010 has a density value $(x_4, y_5)$. When the density is changed to $(x_1, y_1)$, the icon A 1010 gradually moves to a coordinate (1, 1) according to a physical engine. That is, the icon movement can be easily presented by simply changing the density value of the icon.

In addition, the icon A 1010 may move by a user's drag. More specifically, when the user drags the icon A 1010, the icon A 1010 moves according to the user's drag irrespective of a physical field. For this, the electronic device may define that a force enough to ignore a buoyancy is exerted on the icon A 1010, or may treat the icon movement caused by the user's manipulation as an exception for ignoring a physical field. Thereafter, if the user drops the icon A 101 at the coordinate (1, 1), the icon A 1010 is again under influence of the physical field. In this case, if the density of the icon A 1010 is $(x_4, y_5)$, the icon A 1010 may move again to a coordinate (4, 5). Therefore, in order for the icon A 1010 to maintain a position desired by the user, the electronic device changes the density value of the icon A 1010 to $(x_1, y_1)$ corresponding to the coordinate (1, 1). In addition, regarding at least one of other icons which are pushed aside due to the movement of the icon A 1010, the electronic device provides control to move the at least one of other icons by determining a destination point according to a pre-defined rule, and by assigning density values corresponding to the determined destination point.

In general, most smart phones provide a UI of which a horizontal and vertical screen transition occurs when rotating the devices. In other words, when a smart phone in a vertical mode rotates to the left or the right, a screen rotates by 90 degrees in a direction opposite to a rotation of the device, and thus the user can see the same-direction screen before and after the rotation of the device. The conventional electronic device implements the aforementioned horizontal/vertical transition UI by presenting pre-defined two layouts and an animation for a changing process. However, when using the physical engine according to an embodiment of the present disclosure, the horizontal/vertical transition UI can be simply implemented by changing a property of a physical field or an attribute value of a UI object.

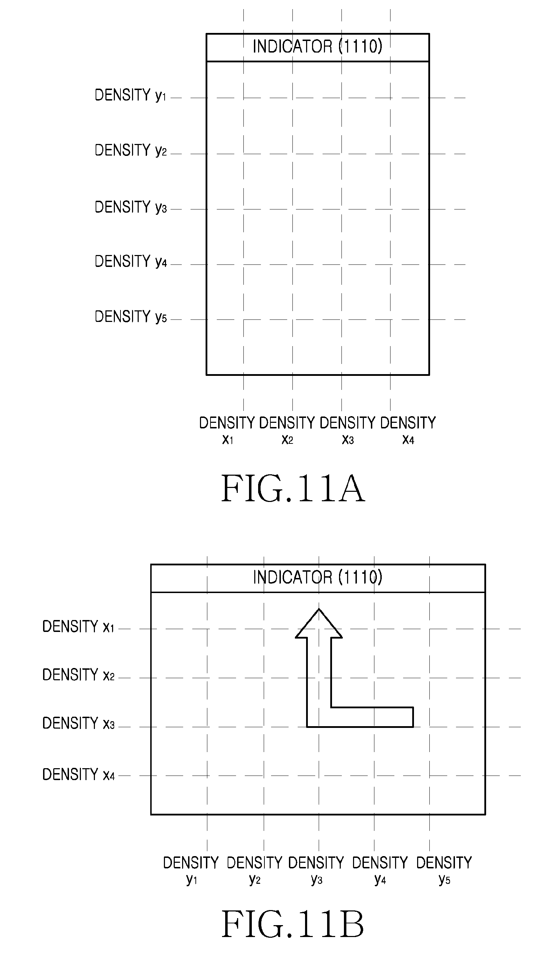

In other words, the horizontal/vertical screen transition UI can be provided by changing a density value of each icon. When UI objects to be displayed in a screen are all mapped to objects of a virtual physical space, a position of each UI object can be controlled. A motion of each object can be presented in a realistic manner on a screen of a mobile device by using a physical engine and a rendering engine. Similarly to the icon, an indicator on the screen can also have automatic position regulation and movement effects when easily changed to a horizontal screen by using a buoyancy. The indicator implies a UI object which displays a status (e.g., a battery residual quantity, a vibration mode status, an external port connection status, or the like.) of an electronic device such as a smart phone, a mobile phone, or the like. The indicator is generally disposed to an uppermost portion of the screen. In embodiments, the indicator moves as shown in FIGS. 11A and 11B.

FIGS. 11A and 11B illustrate a movement of an indicator of a menu screen in an electronic device according to an embodiment of the present disclosure.

Referring to FIGS. 11A and 11B, the device is placed vertically in FIG. 11A, and thus a vertical screen is displayed. In this case, an indicator 1110 has a Y-axis density value corresponding to an uppermost portion of the Y-axis. If the device is placed horizontally, as shown in FIG. 11B, a horizontal screen is displayed. In this case, the indicator 1110 has an X-axis density value corresponding to an uppermost portion of the X-axis. For this, the electronic device recognizes a rotation of the device through a sensor, and changes a density value of the indicator 1110 when rotating.

A physical object for the indicator to be moved as shown in FIGS. 11A and 11B can be configured in various manners.

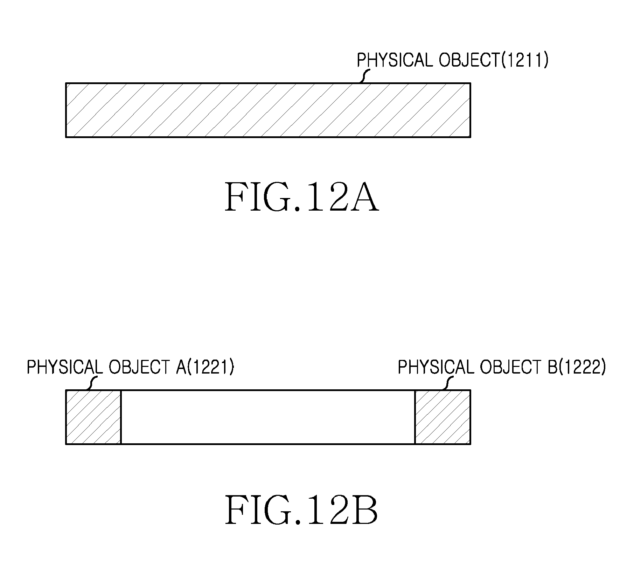

FIGS. 12A and 12B illustrate configuring a physical object for an indicator in an electronic device according to an embodiment of the present disclosure.

Referring to FIG. 12A, a physical object for the indicator may consist of one physical object 1211 including the whole indicator. In embodiments, as shown in FIG. 12B, a physical object for the indicator may consist of two physical objects 1221 and 1222 having different density values and located at both ends of the indicator. In this case, by changing the density values of the two physical objects 1221 and 1222, a movement of the indicator can be presented as shown in FIGS. 11A and 11B

According to an embodiment of the present disclosure, the horizontal/vertical screen transition as well as the indicator movement of FIGS. 11A and 11B can be presented by changing not a density value of UI objects but a property of a physical field. In other words, the horizontal/vertical screen transition can be presented by changing the X-axis and the Y-axis of the physical field into the Y-axis and the X-axis respectively, while maintaining the density value of the UI objects.

According to an embodiment of the present disclosure, the movement of the indicator can be implemented by using a magnetic force. The indicator is attached to an edge of the screen, in general, to an upper end of the screen. Therefore, when the magnetic force is applied to the indicator and when a magnetic force acting as an attractive force to the magnetic force applied to the indicator is applied to an edge of a screen in which the indicator exists, the indicator can be fixed to the edge. In this case, when the horizontal/vertical screen transition is achieved, the magnetic force applied to the edge may be released, and when the magnetic force is applied to an edge of another direction, the indicator may move.

According to an embodiment of the present disclosure, the menu screen may be configured based on a gravity field. That is, unlike a method of regulating a density value of each icon in a virtual physical space, icons can be sorted by using a gravity. Each icon may consist of physical objects which can collide with each other and which are shrinkable in a flat cylindrical shape.

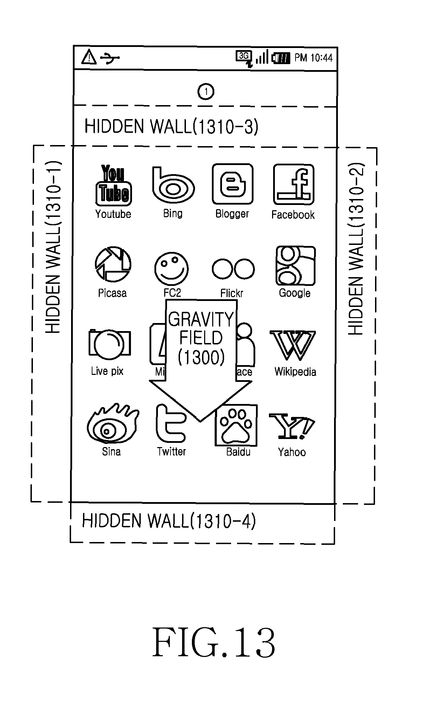

FIG. 13 illustrates a menu screen based on a gravity field in an electronic device according to an embodiment of the present disclosure.

Referring to FIG. 13, the electronic device sets a gravity field 1300 in a downward direction of a menu, and determines hidden walls 1310-1 to 1310-4, respectively, at left, right, upper, and lower edges of the menu screen so that each icon does not move out of the screen. The walls 1310 prevent the icons from moving out of the screen. The number of presentable icons can be changed by regulating positions of the walls 1310. In other words, the wider the space surrounded by the walls 1310, the more the icons can be presented. Alternatively, if the number of icons is maintained, the icons may change in size according to the positions of the walls 1310.

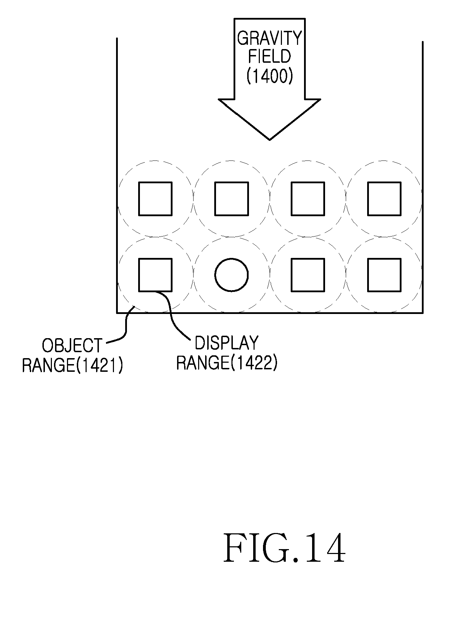

If only the gravity field is used as illustrated in FIG. 13, the icons can be arranged without an interval since there is no force applied to a direction opposite to the gravity. In this case, a user may experience inconvenience. Therefore, in order for the icons to be arranged with a specific interval in the menu screen based on the gravity field, a physical object can be configured as illustrated in FIG. 14.

FIG. 14 illustrates configuring a physical object for an icon in a menu screen based on a gravity field in an electronic device according to an embodiment of the present disclosure.

Referring to FIG. 14, a physical object range 1421 for an icon in a virtual physical space is greater than a display range 1422 of a graphic of an icon displayed in the screen. Accordingly, even if only the gravity field 1400 exists, icons are displayed with an interval corresponding to a portion not displayed in the physical object.

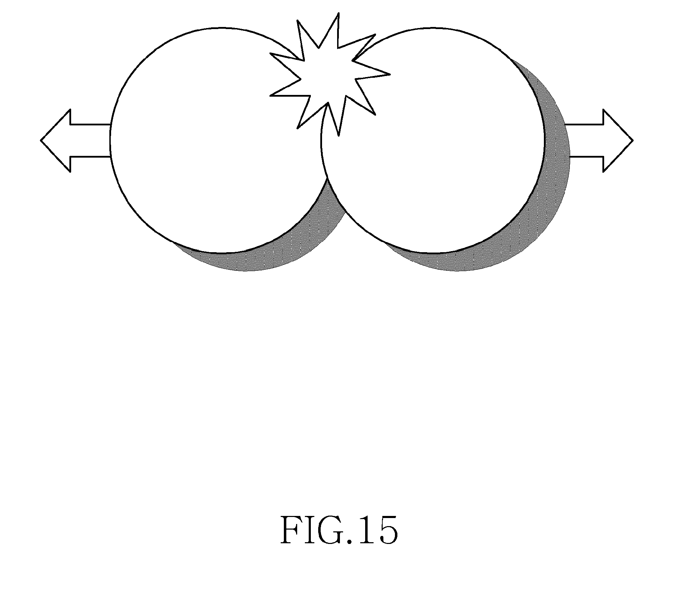

As described above, the electronic device sets the gravity field in any one of directions of the X-axis and the Y-axis, and determines a mass of an icon which is moved by the user to a significantly great value and then moves the icon to a destination position. An icon which moves out of the destination position collides with other icons as illustrated in FIG. 15, and an icon approached to an empty place moves to the empty place.

FIG. 15 illustrates a collision of a physical object in an electronic device according to an embodiment of the present disclosure.

Referring to FIG. 15, collided icons are exerted by a force which allows movement in a direction opposite to a collision position. A magnitude of the force generated due to the collision may vary depending on an elasticity of a physical object mapped to the icon.

According to an embodiment of the present disclosure, the electronic device may extend a region surrounded by hidden walls located at edges of the menu screen without shrinkage when icons collide, and may not include the conventional objects located in an external region. In this case, icons inside the walls may move further by the extended region. In addition, icons which move out of the region due to the collision may be partially invisible due to a region of a screen or window.

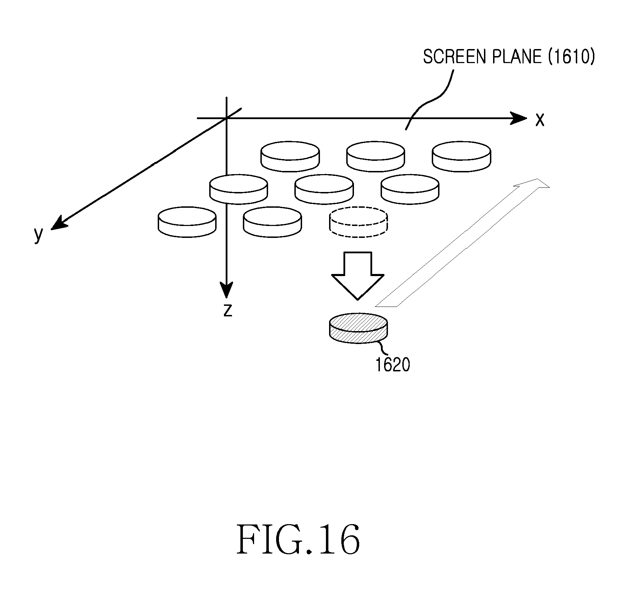

According to an embodiment of the present disclosure, icons may be mapped to a physical object (e.g., a 3D ball, a discus, or the like.) which floats on a liquid. For this, the electronic device may determine a gravity field in a Z-axis which is orthogonal to a plane of the screen, and when a selected icon moves, may define that the icon is submerged in the liquid in a Z-axis direction and thus other icons move in a downward direction. In embodiments, the physical object floating on the liquid can move as illustrated in FIG. 16.

FIG. 16 illustrates a movement of a physical object which floats on a liquid in an electronic device according to an embodiment of the present disclosure.

Referring to FIG. 16, physical objects for a plurality of icons are located on a plane 1610 of a screen, and an object A 1620 is selected and moved in a Z-axis direction. The object A 1620 moves according to a user's drag. In this case, the object A 1620 moves in a downward direction with respect to other icons.

For more realistic presentation, the electronic device may simulate such that a mass of the selected icon is decreased or increased in the Z-axis direction when the selection is maintained, and may present the icon by increasing or decreasing a size thereof according to the law of perspective. When the selected icon stops moving, the electronic device restores the mass of the Z-axis direction to an original value. Accordingly, the icon is restored to the original size, or is increased or decreased in size, and it is possible to present an effect of a collision with another icon overlapping at a position at which the movement stops. Further, it is possible to present an effect in which an icon floats according to an attribute such as a gravity direction, a density, a mass, or the like, besides that the icon is submerged.

It is optional for the aforementioned gravity field, buoyancy field, or the like, to predetermine how and in what intensity it will apply according to an application. However, for various utilizations, a user may be allowed to determine a position. In embodiments, if the gravity field is determined in the X-axis or the Y-axis, icons may be arranged in a random order in a row or column in which the gravity field is not determined.

When positions of icons are determined by using a physical attribute as described above, icons having a similar density or similar priority are arranged with a relatively close distance. Accordingly, a clustering effect based on similarity may be generated. That is, by providing an effect in which icons are mutually adjacent, attached, overlaid, or partially added according to the similarity, user's convenience in use may be improved. In embodiments, the electronic device may assign similar density values to video and audio-related icons, so that the video and audio-related icons are mutually adjacent, and are separated by far from message or mail icons. Further, if the user shakes the electronic device, in other words, if a shaking motion occurs, the electronic device may use a sensor to recognize the shaking motion, and shuffle the icons, and then perform clustering again.

A physical interactive effect based on a physical engine may differ depending on a type of a user input interface.

In embodiments, in a case where an air view or hovering function of a finger or stylus pen is supported, if the finger or stylus pen is located above an icon without a contact and is then focused, it is possible to provide an effect in which the icon is displayed in a great size as if it is attracted by an electric field or a magnetic force or as if it floats due to an enforced buoyancy. For this, when the air view or hovering function is performed, the electronic device may assign an electric force or a magnetic force to a physical object of an icon so that an Z-axis coordinate of the icon is increased, or may increase a Z-axis buoyancy acting on the physical object of the icon.

In embodiments, it is possible to provide an effect in which an icon is restored to an original size when the air view or the hovering stops. For this, when the air view or the hovering stops, the electronic device may remove the assigned electric force or magnetic force, or may restore the buoyancy to an original state.

In embodiments, it is possible to provide an effect in which an icon is displayed in a small size as if it enters under the water when the icon is pressed through a contact made by a finger or a stylus pen, and the icon is increased in size as if it floats on the water when the contact is released. For this, the electronic device may increase a Z-axis mass of the icon when the icon is pressed, and may decrease the Z-axis mass when the contact is released. Alternatively, the electronic device may assign to the icon an additional force which is in proportion to a pressure pressed by the user.

The aforementioned effects can be presented step-by-step according to an interfacing duration time. For one example, the icon may be displayed with a greater size in proportion to an air view/hovering duration time, and may be displayed with a maximum size after a specific time elapses. In embodiments, the icon may be displayed with a smaller size when a contact is maintained for a long time, and may be displayed with a minimum size after a specific time elapses. That is, the electronic device increases a physical attribute value, additionally assigned to the icon during a specific time duration, in proportion to a duration time.

In addition to the aforementioned effects, a physical effect such as a collision or a ripple may be added.

As described above, in addition to a method of using a gravity and a buoyancy, various methods can be used, such as a method of utilizing a pendulum in each UI object, a method of utilizing a spring, or the like. That is, a motion property of a physical engine may be determined by combining various methods, and thus a unique, personalized menu screen can be implemented in an easy and various manner.

The UI object control based on the physical engine according to an embodiment of the present disclosure is applicable to a security keyboard.

When using electronic commerce or financial applications, personal information, a password, or the like, input by a user, may be a target of hackers who intend to illegally use the personal user information. To prevent this, recent mobile applications provide a security keyboard. The conventional security keyboard changes a coordinate of a keyboard button in a screen by randomly arranging a space between keyboard buttons whenever being executed. Accordingly, attempts of the hackers, who intend to estimate actual information which is input from an absolute coordinate of a screen touched by the user, are invalidated.

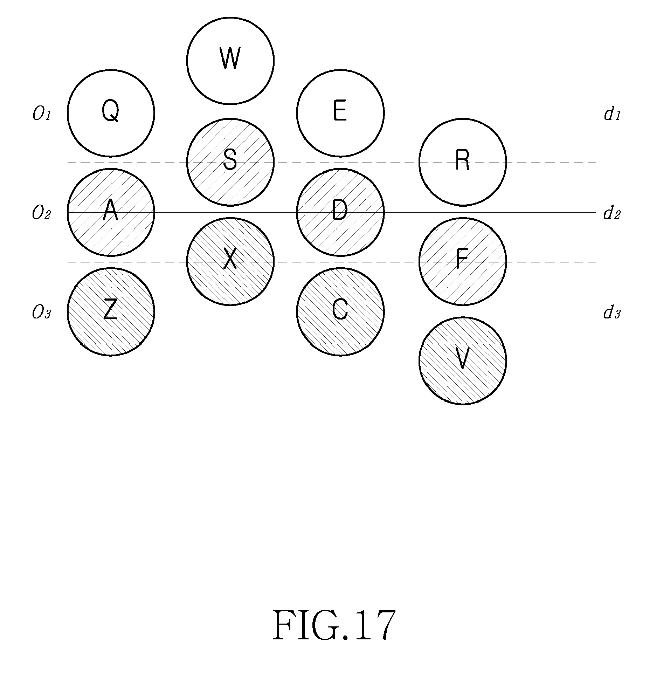

The UI object control based on the physical engine according to an embodiment of the present disclosure is applicable to implement a security keyboard which improves security by preventing absolute positions on the screen from being associated with arrangement of keyboard buttons. In a security keyboard according to an embodiment of the present disclosure, respective keyboard buttons are configured with physical objects which exist in a virtual physical space, and positions of the physical objects are determined according to a physical force acting on the virtual physical space and a physical attribute of the physical object. The positions of the buttons are changed when a physical attribute value is changed. When the position is changed, a natural movement process may be presented without an aid of an animation effect. The aforementioned security keyboard may be as shown in FIG. 17.

FIG. 17 illustrates a security keyboard in an electronic device according to an embodiment of the present disclosure.

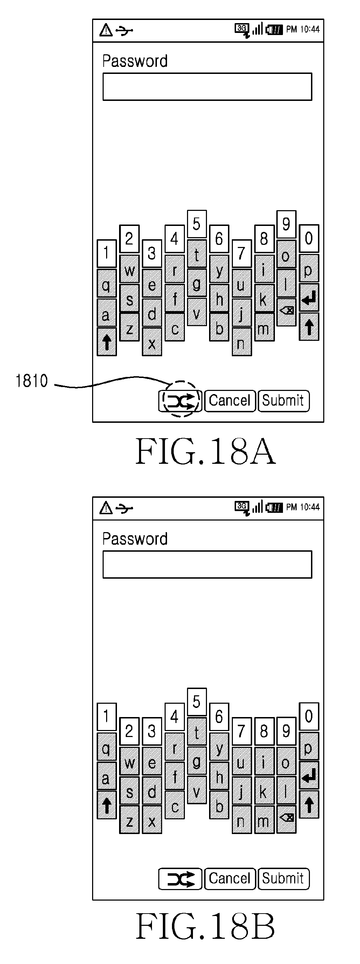

Referring to FIG. 17, only some buttons of the security keyboard are illustrated. Respective buttons in the security keyboard are all mapped to independent physical objects. In addition, the respective buttons are assigned different density values, such as $o_1$, $o_2$, $o_3$, or the like. Virtual spaces to which the buttons are arranged are filled with media having different densities such as $d_1$, $d_2$, $d_3$. Accordingly, the buttons are located at an equilibrium point between a gravity and a buoyancy based on densities thereof. At the occurrence of a pre-defined re-arrangement command of a user, the electronic device re-determines a density value of each button, and thereafter distributes the buttons. In embodiments, the re-arrangement command may be a button defined for button distribution, a shaking motion, or the like. Accordingly, each button moves to a corresponding position due to a difference between a density determined for each button and a density of a medium including the object. In this case, since the density of each button is determined differently whenever distribution is performed, the buttons are re-arranged within the media. In case of the embodiment of FIG. 17, for user's convenience, only a height of each column is changed while maintaining a keyboard arrangement of the conventional qwerty keyboard. An example of a screen of an application for implementing the security keyboard of FIG. 17 is as shown in FIGS. 18A and 18B.

FIGS. 18A and 18B illustrate implementing a security keyboard in an electronic device according to an embodiment of the present disclosure.

Referring to FIGS. 18A and 18B, the security keyboard is provided when a password is input. Referring to FIG. 18A, a keyboard is arranged such that columns have different heights. A shuffle button 1810 exists to re-arrange buttons. When the shuffle button 1810 is input, the buttons are re-arranged as illustrated in FIG. 18B.

The security keyboard based on the aforementioned physical engine does not designate an absolute position of each keyboard button. Instead, a physical attribute of a keyboard button is determined differently, and a position thereof moves according to a calculation result obtained from the physical engine until an entropy becomes zero in a virtual physical space. Therefore, it is more intuitive and natural than the conventional method due to an effect as if an object drops into the water, rather than the security keyboard based on the physical engine. In addition, a requirement for arrangement in a random position, which is required in the conventional method, can be easily satisfied by changing a physical attribute of each button object.

Aspects to be considered when implementing the security keyboard based on the physical engine are a size of a physical object for a button, a density difference between physical objects, an elasticity value at collision, or the like. When the values listed above are determined incorrectly, buttons may become obstacles to each other at a wrong position, which may cause an interference, or an excessively frequent movement and a long time of stopping and holding, which may result in deterioration in efficiency. The above aspects can be solved by tuning overall property values.

In addition, the following conditions are required in a process of applying a height of each column of the keyboard to a random value. First, a height value must be determined randomly. In addition, to avoid inconvenience of a user input, a height difference must not be greater between adjacent columns. In addition, buttons must not be deviated from an edge of a layout. To satisfy the aforementioned conditions, the height of each column can be determined by using a turtle graphics method which is simply implemented. In addition, the electronic device may determine a position of a first column to any height, and thereafter may re-determine the height by moving in any direction.

According to an embodiment of the present disclosure, an attribute value assigned to a physical object of each button may change depending on a user input. In other words, the attribute value of the physical object may be increased or decreased in an upper-limit range and a lower-limit range according to a level of a user interface input for each button. In embodiments, at least one of a density, a size, and a weight can be changed. As the attribute value changes, a position of a button mapped to the physical object changes gradually. Accordingly, security is more enforced. For one example, when a button 'y' is input several times, a column to which the button 'y' belongs may move gradually in a downward direction whenever the button 'y' is input, or the button 'y' may move to the left or the right. In embodiments, if the button 'y' is input several times greater than or equal to a specific number of times, the button 'y' may be increased or decreased in size.

According to an embodiment of the present disclosure, a button may be extended when a contact is made, and when the contact is released, adjacent keys may vibrate while the button is decreased in size. Alternatively, positions of the buttons may change due to a collision with other buttons. On the contrary, when a contact is made, a button may be decreased in size as if it moves along an Z-axis, and when the contact is released, the button may be increased in size as if it pops up and then may be restored to its original size.

In the security keyboard of the present disclosure, when a re-arrangement command caused by a user interface input is generated, attributes of UI objects are re-determined randomly within a specific range. The re-arrangement command is preferably performed when a key input is made by a specific number of times (or more) or when a re-arrangement UI is selected.

The UI object control based on the physical engine according to an embodiment of the present disclosure is applicable to a UI based on a WiFi search result.

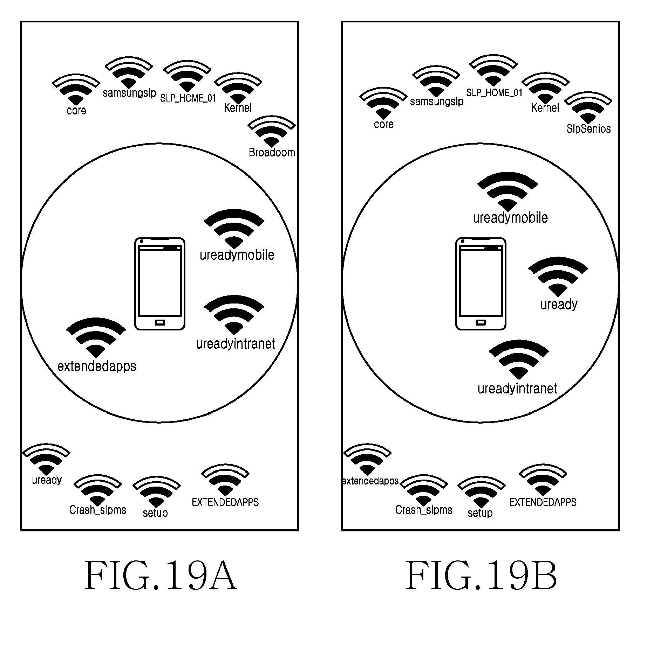

When a user activates a WiFi function of an electronic device, the electronic device searches for accessible neighboring Access Points (APs) and displays a list showing the result. In the list, each AP is sorted according to a previous usage status, a signal strength, or the like. The found AP may be added or deleted according to AP signal strength in the list. In this case, re-arrangement is performed every time. If an AP item suddenly appears or disappears in the list repetitively, the user may be confused visually. Accordingly, the present disclosure proposes a method capable of presenting the found AP more intuitively on the basis of the physical engine. An example of searching for an AP according to an embodiment of the present disclosure is as shown in FIGS. 19A and 19B.

FIGS. 19A and 19B illustrate an AP search screen in an electronic device according to an embodiment of the present disclosure.

Referring to FIGS. 19A and 19B, signal strength is presented with a relative distance and an icon size on a 2D plane in which the electronic device is located in a center. FIGS. 19A and 19B illustrate screens in different environments. The stronger the signal strength, the greater the icon size, and the closer the icon is arranged to the center of the circle. As the signal strength changes, the icon moves in an outer direction of the circle, and the icon size is decreased. Therefore, user's confusion caused by a sudden screen change can be minimized in the AP search screen. When a security connection is made, whether it is a pre-stored AP, or the like, can be presented in a format of a badge in an icon.

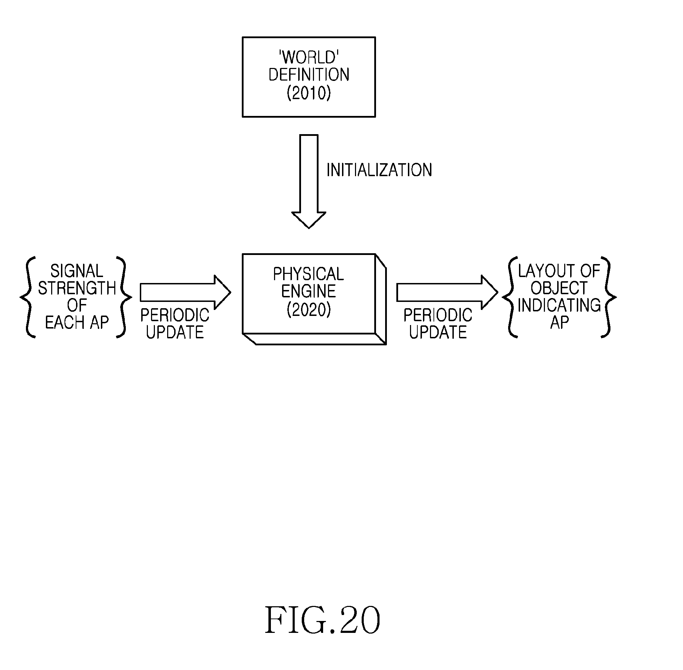

If the screen of FIGS. 19A and 19B are implemented by using the conventional technique, an enormous effort is required, for example, to define each attribute, to directly calculate an action caused by the attributes, and to implement a corresponding animation. However, if the physical engine is used according to an embodiment of the present disclosure, a motion of an icon can be presented in a realistic manner by defining an icon indicating each AP to a physical object in a virtual physical space, by assigning a physical attribute, and by performing simulation through the physical engine. The application performs only a function of updating a screen according to a state of a physical object only periodically. In this case, a variable which is input to determine a physical attribute value is signal strength of each AP. A process of converting the signal strength to a position of an AP icon is as shown in FIG. 20.

FIG. 20 illustrates a process of converting signal strength to a position of an AP icon in an electronic device according to an embodiment of the present disclosure.

Referring to FIG. 20, a world definition 2010 is used for initialization. In addition, signal strength of each AP is input to a physical engine 2020 through a periodic update, and accordingly, the physical engine 2020 periodically updates a layout of an object which indicates an AP. Herein, the world definition 2010 is for implementing a virtual physical environment, and includes defining of a size, shape, or attribute of an object which symbolizes the AP, and defining of a force which acts to locate the object at a proper position according to the attribute.

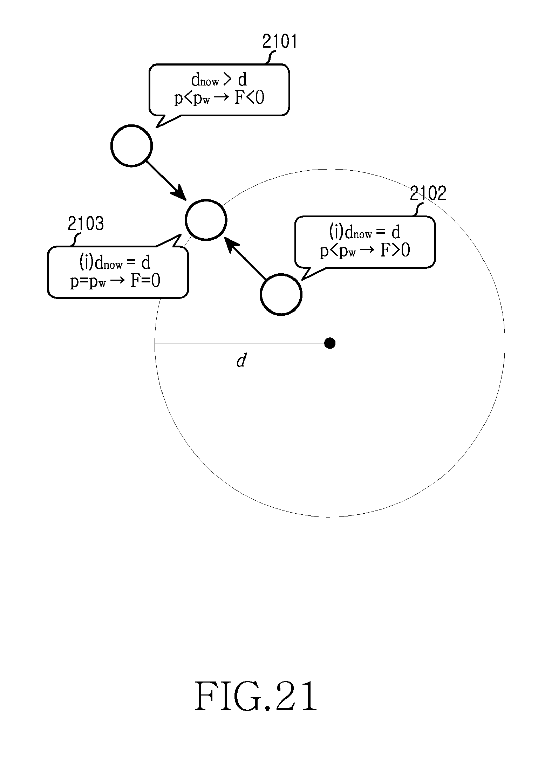

In order to arrange AP icons such that a distance to the center is in inverse proportion to signal strength, it is determined that a physical virtual environment is filled with a medium with a density of $\rho_w$, and thus the AP icon is significantly influenced by a buoyancy. A distance d between the center and the physical object for the AP is determined according to signal strength. If the physical object for the AP is intended to reach the distance d determined according to the signal strength, the electronic device compares a current distance $d_{now}$ and a destination distance d, and regulates a density $\rho$ of the physical object, thereby finally controlling a force F acting on the physical object. A control process based on a comparison between the current distance $d_{now}$ and the destination distance d is as shown in FIG. 21.

FIG. 21 illustrates a relation of a density of a physical object for an AP and a force acting thereon in an electronic device according to an embodiment of the present disclosure.

Referring to FIG. 21, in a case 2101 where $d_{now}$ is greater than d, the electronic device determines a density $\rho$ of the physical object to be greater than a density $\rho_w$ of a medium, so that a force F is exerted in a center direction. On the other hand, in a case 2102 where $d_{now}$ is less than d, the electronic device determines the density $\rho$ of the physical object to be less than the density $\rho_w$ of the medium, so that the force F is exerted in a direction opposite to the center direction. On the other hand, in a case 2103 where $d_{now}$ is equal to d, the electronic device maintains the density $\rho$ of the physical object to be equal to the density $\rho_w$ of the medium, so that the force F is exerted in the center direction. The aforementioned density change can be expressed by Equation (5) below.

$$d_{now} < d, \quad \rho = r_1 \rho_w (r_1 < 1)$$

$$d_{now} > d, \quad \rho = r_2 \rho_w (r_2 > 1) \qquad\qquad ...... \text{ Equation (5)}$$

$$d_{now} = d, \qquad \rho = \rho_w$$

In Equation (5) above, $d_{now}$ denotes a current distance between a physical object and a center, d denotes a target distance determined according to received signal strength, $\rho$ denotes a density of the physical object, $\rho_w$ denotes a density of a medium, $r_1$ denotes a weight for decreasing the density, and $r_2$ denotes a weight for increasing the density.

As illustrated in FIG. 21 and Equation (5) above, the physical object moves when the force F is exerted by changing the density of the physical object. When the distance between the physical object and the center reaches the target distance d, the electronic device restores the density of the physical object to be equal to the density $\rho_w$ of the medium, and thus removes the applied force and fixes the object to a corresponding position.

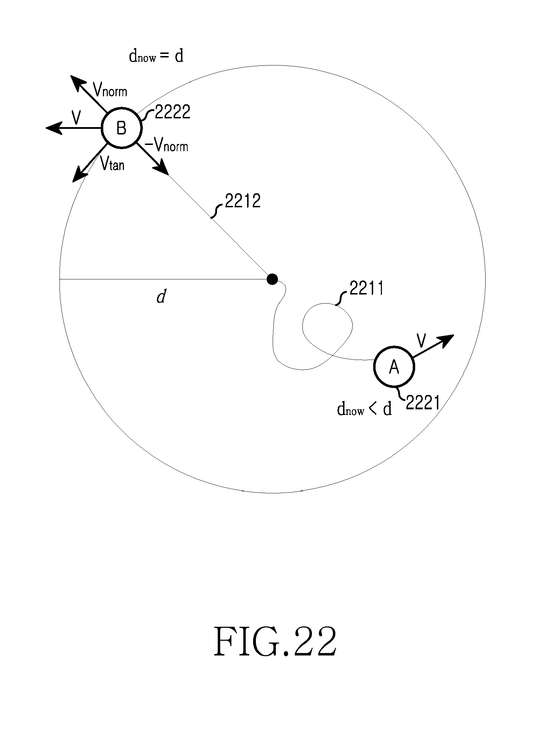

When the physical object reaches a desired position, the electronic device restores the density $\rho$ to remove the force F. However, since the physical object is on the move with a velocity, the physical object cannot stop immediately due to inertia and thus passes the corresponding position. As the object passes a destination point, the force F is regulated again, and the object returns to an original position by changing a direction and again passes the point, repetitively, that is, a simple harmonic oscillation motion may occur. To solve this problem, another force is required. According to an embodiment of the present disclosure, the electronic device defines a situation in which the object is suspended by a string with a fixed length d from the center in order to fix the object when the object reaches the destination point. The physical object suspended by the string is as shown in FIG. 22.

FIG. 22 illustrates modeling for avoiding a simple harmonic oscillation of a physical object for an AP in an electronic device according to an embodiment of the present disclosure.

Referring to FIG. 22, an object A 2221 and an object B 2222 are suspended by strings 2211 and 2212. In case of the object A 2221, a distance to the center is less than a length d of the string 2211 (i.e., $d_{now} < d$), and thus there is no action caused by the string 2211. On the other hand, in case of the object B 2222, a distance to the center reaches a length d of the string 2212 (i.e., $d_{now} = d$), and thus the object B 2222 cannot move further due to the influence of a tension of the string 2212. The aforementioned action is a result obtained by adding v to a vector $-v_{norm}$ which physically counteracts a normal component $v_{norm}$ of a velocity vector v and which has the same size and an opposite direction with respect to $v_{norm}$.

In embodiments, it is possible to provide an effect as if the object is fixed to a corresponding position at a moment of reaching the position while the object shows a free motion as if it is floating by a buoyancy during the time that the object moves towards its position. According to an embodiment of the present disclosure, in addition to modeling for adding the string, if the distance between the physical object and the center is simply d, the simple harmonic oscillation can be avoided through exception handling for fixing the position of the physical object.

As described above, if a world, that is, a physical virtual space, is defined and thereafter a density of each object is changed according to AP signal strength and a relative current position from the center of the object, the physical engine provides a position of each icon changed by a buoyancy, a gravity, or a tension in the virtual physical environment. A UI presentation element simply performs periodical sampling and rendering on a result provided by the physical engine, and thus can naturally move the AP icon to a proper position

The aforementioned embodiment may also be equally applied to a communication element based on not only WiFi but also Bluetooth or the like. An attribute of UI objects is controlled based on strength of a radio signal received by a user equipment, and the controlled attribute may include at least one of a density, a size, a weight, a tension, and an elasticity.

In addition thereto, it is possible to provide an effect in which a distance or size varies depending on the number of occurrences of a user input per icon or a record of maintaining a connection with a device which transmits a corresponding radio signal. For this, the electronic device may increase or decrease an attribute value of a UI object within an upper-limit range and a lower-limit range on the basis of the number of occurrences of the user input or the record of maintaining the connection. In embodiments, a frequently used AP icon may be increased in size gradually, or may be increased in proximity. In addition, AP icons may be controlled such that the stronger the signal strength, the brighter the color, as if floating on the water, and the greater the size. On the contrary, the lower the signal strength or the lower the usage frequency, the darker the color, as if being submerged in the water, and the smaller the size.

The UI object control based on the physical engine according to the embodiment of the present disclosure is applicable to a locking screen.

In an electronic device which supports a touch input, a locking screen is used to avoid an erroneous operation caused by an unintentional user input. In general, if a power button is pressed or if there is no input for a specific time duration, the electronic device turns off a screen and enters a locking mode to decrease consumption of electric current. Thereafter, if a user presses a home button or the power button, the screen is turned on and the locking screen appears. The user can release a locking button on the locking screen according to a pre-defined motion.

The conventional locking screens tend to focus on only a functional aspect in appropriation with its name. In embodiments, 'Push to Unlock' of 'iOS', 'Draw to Unlock' of 'Android', unlocking based on a Personal Identification Number (PIN) input, and unlocking based on a password input are widely employed. However, with a growing trend of applying an intuitive UI, there is a need to apply a new type of UI to the locking screen.

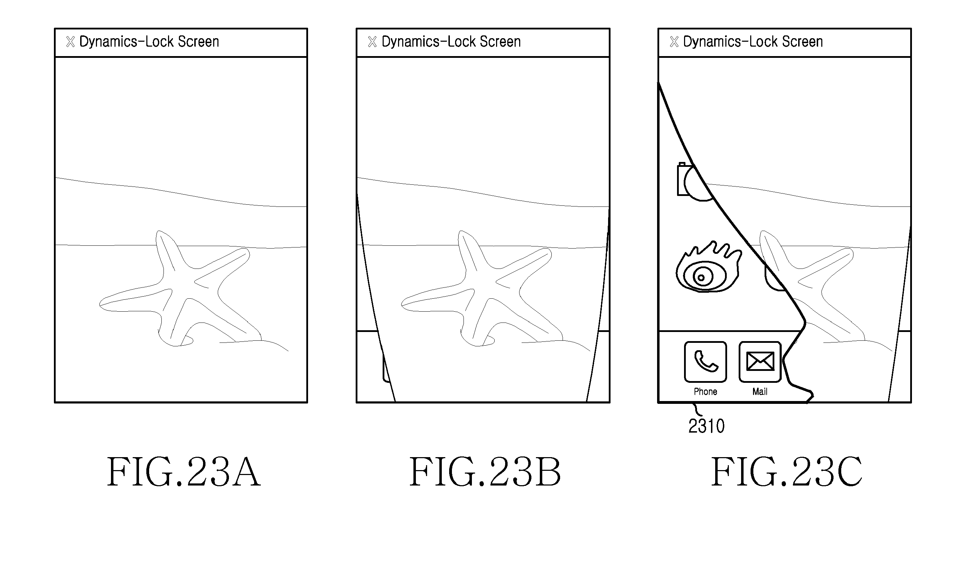

FIGS. 23A, 23B and 23C illustrate a locking screen in an electronic device according to an embodiment of the present disclosure.

Referring to FIGS. 23A, 23B and 23C, the present disclosure provides a locking screen which provides a curtain effect based on a physical engine. As illustrated in FIG. 23A, the electronic device according to an embodiment of the present disclosure determines the locking screen to a state in which the curtain is stationary, and provides an effect of opening the curtain according to a user input. Thus, realistic and friendly unlocking is provided. That is, a UI object which overlaps on a home screen has the same attribute as the curtain when the screen is locked. If there is no input on a touch screen, no external force is exerted, and thus the locking screen almost does not flutter as if it is a stationary background. In this case, if a touch input occurs, although the locking screen is not released, as illustrated in FIG. 23B, the curtain naturally flutters around a position where the input is given, and the motion stops after a specific time elapses. Then, when a drag input occurs, as illustrated in FIG. 23C, the electronic device provides an effect in which the curtain moves as if it is actually touched by a hand. A home screen behind the locking screen is partially displayed in an empty space 2310 produced by the motion of the curtain. If the hand is removed from the drag state, the locking screen is released, and the home screen appears.

A virtual physical space applied to the aforementioned locking screen is configured as followed. In addition to a screen constituting a home screen disposed behind a curtain, the curtain constituting an initial screen is configured as an independent object, and collides with another rigid body. The curtain should not be the rigid body, but may be a soft body. The soft body implies an object of which a shape is changeable by an external input in a physical engine or a collision with another object. Unlike the rigid body, the soft body is flexibly changed as if two points are connected by a spring instead of fixing a distance between any two points in an object. Thus, soft-body dynamics are defined independent of rigid-body dynamics. In order to provide a UI having an impression similar to the real world, soft-body dynamics which express fabrics, clothes, or the like, need to be implemented in a more detailed and specific manner.

In order for the curtain to be defined as the soft body, the electronic device defines one mesh, and assigns an attribute of soft dynamics to the mesh. After generating the mesh, the electronic device defines the number of indices by determining a grid of an X-axis and a Y-axis. The index indicates a position of a curtain corresponding to a touch point as an integer approximately, and is used to designate an anchor at that position. Accordingly, the physical engine determines the attribute of the mesh as the soft body, and additionally determines a mass, a collision shape, or the like, and thus finally can generate one object, i.e., the curtain, in a virtual physical space.

To make a stationary curtain look like a real curtain, a rigid body is used to shake the curtain by making a collision with the curtain. While the soft body uses a world coordinate system, the rigid body unifies a world change between physical and graphic objects. Therefore, to make a collision between the soft body and the rigid body, some physical engines may support an additional dynamic world capable of expressing both the soft body and the rigid body. In embodiments, in case of a well-known physical engine 'bullet', it is provided a dynamic world called 'btSoftRigidDynamicsWorld' capable of expressing both the soft body and the rigid body. In the additional dynamic world, when the collision occurs between the rigid body and the soft body, the physical engine calculates an impulse by sensing a collision of respective vertices of the physical engine, and thereafter calculates a velocity after the collision.

When a finger is in contact with a touch screen, two scenarios are roughly required, i.e., a scenario in which a locking screen is maintained and a scenario in which the locking screen is released. The scenario in which the locking screen is maintained is classified into two cases, i.e., a case where a touch event occurs and a case where a motion event occurs. The scenario in which the locking screen is released is classified into two cases, i.e., a case where a motion event occurs and a case where a touch-up event for taking off the finger occurs.

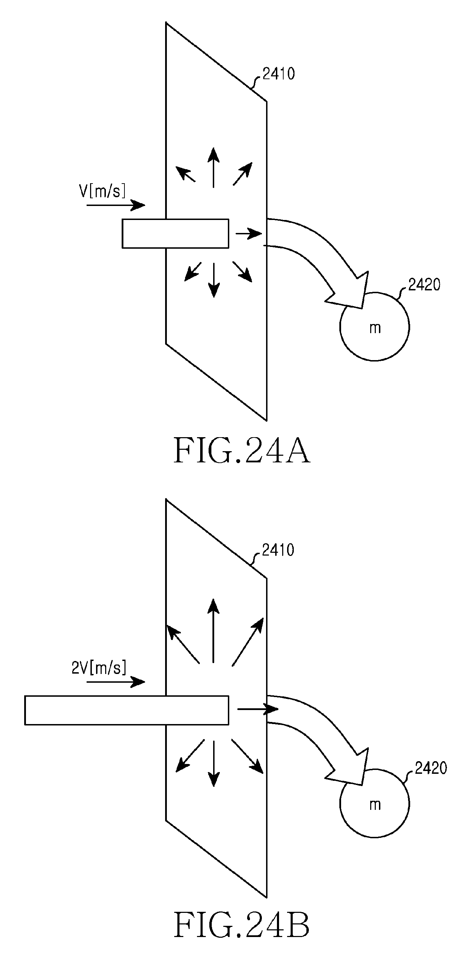

The scenario in which the locking screen is maintained is as follows. When the touch input occurs, a hidden independent rigid body is generated. The rigid body generated at a moment where the touch input is generated moves in a direction of '-z', collides with a curtain, and thus shakes the curtain. Accordingly, an effect in which the curtain flutters is achieved. In addition, the rigid body disappears out of the screen at the apparent achieved velocity after the collision. The extent of curtain fluttering is determined according to a velocity at which the rigid body flies, a mass of the rigid body, a tension of the curtain, or the like. A collision between the rigid body and the curtain is as shown in FIGS. 24A and 24B.

FIGS. 24A and 24B illustrate a collision between a curtain and a rigid body which constitute a locking screen in an electronic device according to an embodiment of the present disclosure.

Referring to FIGS. 24A and 24B, a rigid body 2420 having a mass m collides with a curtain 2410 at different velocities. FIG. 24A illustrates a case where the rigid body 2420 collides at a velocity of v[m/s], and FIG. 24B illustrates a case where the rigid body 2420 collides at a velocity of 2v[m/s]. The greater the collision velocity of the rigid body 2420, the greater the force exerted to the curtain 2410, and thus the more the curtain 2410 flutters.

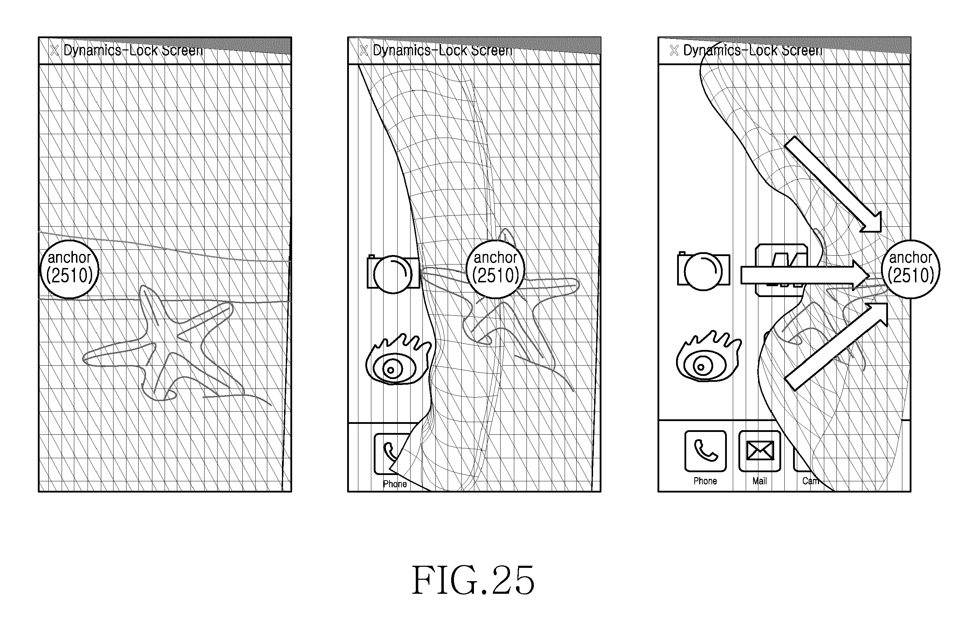

The electronic device recognizes a motion input simultaneously with a touch-down input. In this case, in order to distinguish the curtain fluttering and the unlocking, the unlocking scenario may be performed only when a panning distance is greater than or equal to a pre-defined threshold. In embodiments, the threshold may be 100 pixels. If the panning distance is greater than or equal to the threshold, one more rigid bodies to be used are generated due to a motion. The rigid body is connected with an anchor at a position at which a touch input occurs, unlike the rigid body which moves in the direction of '-z' and makes a collision. When a drag occurs while maintaining a touch state, the rigid body moves according to a position of a touch point. Thus, if a portion of the curtain connected to the rigid body moves, since the remaining portions of the curtain also consist of a mesh, the remaining portions also move together by an attractive force. As a result, it is provided an effect in which the curtain moves according to a touch point here and there. A shape of the curtain movement is as shown in FIG. 25.

FIG. 25 illustrates a motion of a curtain constituting a locking screen in an electronic device according to an embodiment of the present disclosure.

Referring to FIG. 25, when a touch input occurs, an anchor 2510 is generated at a touch point as illustrated in FIG. 25A. Thereafter, if the touch point moves, the anchor 2510 also moves as illustrated in FIG. 25B. Accordingly, as illustrated in FIG. 25C, along with a movement of the anchor 2510, remaining portions of the curtain move as if being pulled by the anchor 2510.

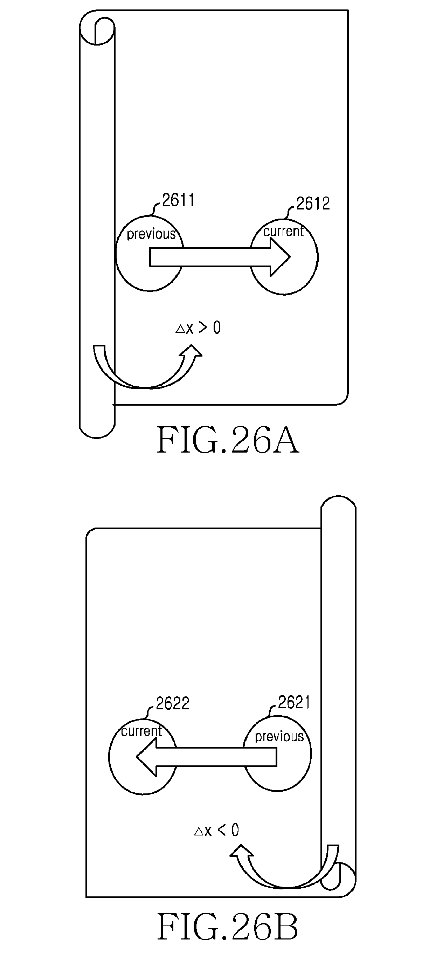

When the touch input is released in a state where the curtain moves by the anchor, in other words, when a finger is taken off, the electronic device calculates a difference between a coordinate value at a time when a motion event occurs and a coordinate value at a time when the touch input is released. If the calculation result is a negative value, the curtain moves to the left, and if it is a positive value, the curtain moves to the right and a hook used to persistently sustain the curtain is also removed. When the hook is removed, an effect in which the curtain disappears out of the screen is provided, and the locking screen is released. The aforementioned locking screen release is as shown in FIGS. 26A and 26B.

FIGS. 26A and 26B illustrate a release of a locking screen in an electronic device according to an embodiment of the present disclosure.

Referring to FIGS. 26A and 26B, a direction in which a curtain disappears differs depending on a relative relation between a start point (i.e., a previous point) and an end point (i.e., a current point) of a touch point. In case of FIG. 26A, since a current touch point 2612 is located in a right portion of a previous touch point 2611, the curtain disappears towards a right direction. In case of FIG. 26B, since a current touch point 2622 is located in a left portion of a previous touch point 2621, the curtain disappears towards a left direction. The aforementioned locking screen release can be expressed with a pseudo code, as shown in Table 1 below.

Table 1

| if (cur_x - prev_x > 0) |
| --- |
| move the curtain to right direction |
| else if(cur_x - prev x < 0) |
| move the curtain to left direction |

Accordingly, the user feels as if a finger of the user actually touches the curtain, and thus has an experience of releasing a locking screen by using the curtain.

According to an embodiment of the present disclosure, a motion effect may be expressed differently by an environment change measured through a sensor. In other words, the electronic device may assign an additional attribute based on the sensor to provide a variety of curtain motion effects. In embodiments, various modified motion effects can be provided by setting a gravity field to an X-axis and a Y-axis. In embodiments, if the gravity field is set such that a gravity magnitude is increased from the left to the right in an X-axis on a screen, pulling a curtain from the left to the right shows a faster movement than pulling the curtain from the right to the left. In embodiments, when a strong gravity effect is applied to a lower portion of the screen in a Y-axis direction and the curtain is pulled from the left to the right while holding a middle portion of the curtain in a vertical direction, it is provided an effect in which a bottom part of the curtain is heavier and slower but strongly flutters, whereas an upper part of the curtain is open lighter and faster. If the electronic device is placed vertically, the vertical placement is sensed by using an accelerometer or a gyro sensor, and when a gravity is automatically set in a downward direction, various effects can be provided according to a pose of the device. In addition, if the electronic device is laid on a floor, when the user touches a curtain, it can be provided an animation effect or the like as if being pressed deeper than a case of being placed vertically.

According to an embodiment of the present disclosure, when a curtain is used for unlocking, another mechanism such as 'Blow to Unlock' may also be considered in addition to an effect of pulling the curtain as described above. That is, if the electronic device can sense that the user blows air by using a sensor, the electronic device may sense blowing of the user, then provide a physical effect corresponding to the blowing, and then release the locking. In embodiments, the physical effect corresponding to the blowing may be a collision of a rigid body on a curtain object.

The UI object control based on the physical engine according to an embodiment of the present disclosure is applicable to data classification.

When displaying a data list (e.g., a list which expresses a photo, a media file, or the like, in a form of an icon), a physical attribute may be assigned according to a data property, and when a physical field is set, UI objects indicating data having a similar property may be sorted according to the property. That is, the electronic device maps the data property of the UI object expressed in the screen to an object attribute value on a physical engine. For example, if a date of a photo is mapped to a density, an old photo or a recent photo may move in different directions. In embodiments, if a tone of a photo is mapped to a density, a bright photo and a dark photo move in different directions. In embodiments, if a music genre is mapped to a density, music files are gathered according to the genre.

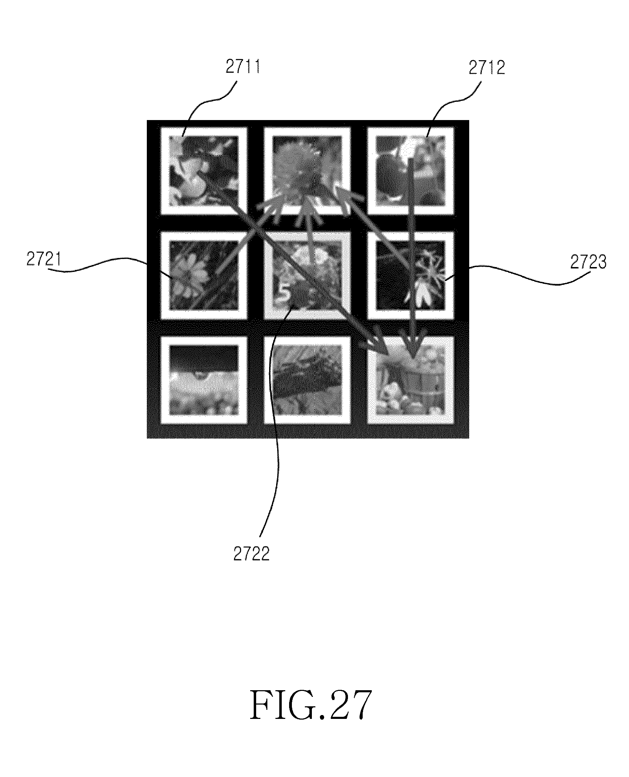

FIG. 27 illustrates a UI object grouping on the basis of physical attribute mapping in an electronic device according to an embodiment of the present disclosure.

Referring to FIG. 27, a 1st UI object 2711 and a 2nd UI object 2712 have similar properties and thus are assigned similar attribute values. Accordingly, the 1st UI object 2711 and the 2nd UI object 2712 move in a downward direction. In addition, a 3rd UI object 2721, a 4th UI object 2722, and a 5th UI object 2723 have similar properties, and thus are assigned similar attribute values. Accordingly, the 3rd UI object 2721, the 4th UI object 2722, and the 5th UI object move in an upward direction.

The UI object control based on the physical engine according to an embodiment of the present disclosure is applicable to indicate a user's usage history.

In embodiments, a worn-out or glittering effect may be applied to a frequently used icon. More specifically, the electronic device applies the glittering effect to the frequently used icon, so that the user can easily recognize it.

The UI object control based on the physical engine according to the embodiment of the present disclosure is applicable for a more effective notification UI expression.

In general, an electronic device such as a mobile phone or the like provides a notification function such as message reception or the like. According to an embodiment of the present disclosure, the electronic device may generate a UI object having a physical attribute when a notification occurs. In embodiments, the electronic device sets a physical field in a screen in which the notification UI is displayed, and replaces/generates the notification object such as a water bubble or an air bubble, thereby being able to provide an effect of automatically rising from below.

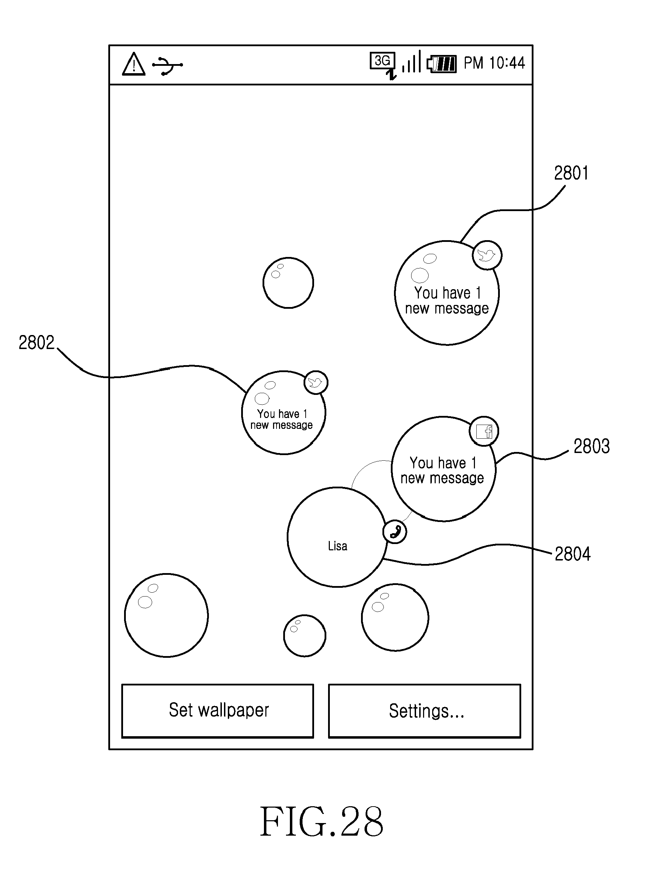

FIG. 28 illustrates a notification UI in an electronic device according to an embodiment of the present disclosure.

Referring to FIG. 28, a plurality of notifications 2801 to 2804 are generated, and accordingly, the electronic device generates notification UI objects respectively for the notifications 2801 to 2804. In this case, the notification UI objects are mapped to physical objects such as an air bubble or a water bubble. Since the physical objects are slowly raised by an operation of a physical engine, the electronic device displays the notification UI object according to the rising of the physical objects.

Methods based on the various embodiments disclosed in the claims and/or specification of the present disclosure can be implemented in hardware, software, or a combination of both.

When implemented in software, computer readable recording medium for storing one or more programs (i.e., software modules) can be provided. The one or more programs stored in the computer readable recording medium are configured for execution performed by one or more processors in an electronic device such as a portable terminal. The one or more programs include instructions for allowing the electronic device to execute the methods based on the various embodiments disclosed in the claims and/or specification of the present disclosure.

The program (i.e., the software module or software) can be stored in a random access memory, a non-volatile memory including a flash memory, a Read Only Memory (ROM), an Electrically Erasable Programmable Read Only Memory (EEPROM), a magnetic disc storage device, a Compact Disc-ROM (CD-ROM), Digital Versatile Discs (DVDs) or other forms of optical storage devices, and a magnetic cassette. Alternatively, the program can be stored in a memory configured in combination of all or some of these storage media. In addition, the configured memory may be plural in number.

Further, the program can be stored in an attachable storage device capable of accessing the electronic device through a communication network such as the Internet, an Intranet, a Local Area Network (LAN), a Wide LAN (WLAN), or a Storage Area Network (SAN) or a communication network configured by combining the networks. The storage device can access via an external port to the device for performing an embodiment of the present disclosure. Furthermore, an additional storage device on the communication network can access to the device for performing an embodiment of the present disclosure.

According to various embodiments of the present disclosure, by applying a physical engine in a mobile UI framework, a visual effect or a screen transition effect provided in the UI framework can be presented. Natural effects caused by the physical engine provide an ordinary and friendly feeling to a user, and such a naturalness can provide a positive experience to the user.

While the present disclosure has been shown and described with reference to various embodiments thereof, it will be understood by those skilled in the art that various changes in form and details may be made therein without departing from the spirit and scope of the present disclosure as defined by the appended claims and their equivalents.

**Claims**

1.  A method of operating an electronic device, the method comprising:

    setting a virtual physical field in at least one region in a screen;
    mapping a User Interface (UI) object to be displayed in the at least one region to at least one virtual physical object in the physical field;
    assigning a physical attribute to the at least one virtual physical object;
    determining a state of the at least one physical object on the basis of the physical field and the physical attribute of the UI object by using a physical engine, the state including at least one of a location, a form, a shape, and a color; and
    displaying the UI object according to the state of the at least one virtual physical object.

2.  The method of claim 1, further comprising:

    changing at least one of a property of the virtual physical field and an attribute value of the at least one physical object according to at least one of a user input and an environment change detected by using a sensor;
    determining the state of the at least one virtual physical object using the physical engine; and
    displaying the UI object according to the state of the at least one virtual physical object.

3.  The method of claim 1, wherein the number of the at least one region and a range thereof are changed according to an application to be executed.

4.  The method of claim 1,
    wherein the physical field is set independently in at least one axis which requires a state change of the UI object, and
    wherein an attribute of the at least one virtual physical object is determined independently in at least one axis which requires a state change of the UI object.

5.  The method of claim 1, wherein the physical field has attribute values which vary depending on a coordinate in one axis.

6.  The method of claim 1,
    wherein the physical field has at least one attribute among a gravity, a buoyancy, an electric force, a magnetic force, an elastic force, and a tension, and
    wherein an attribute assigned to the at least one virtual physical object includes at least one of a size, a density, a volume, a form, a shape, a color, an elasticity, a viscosity, a strain, a motion velocity, a motion vector, an electric force, and a magnetic force.

7.  The method of claim 1, wherein the UI object includes an icon displayed in a menu screen,
    wherein an attribute value assigned to the at least one virtual physical object mapped to the icon determines a position of the icon, and
    wherein the attribute value is changed to an attribute value corresponding to a destination point when the icon moves.

8.  The method of claim 1, wherein the UI object includes an icon displayed in a menu screen,
    wherein the physical field includes a buoyancy field and a gravity field, the gravity field being exerted in an opposite direction to the buoyancy field,
    wherein an attribute value assigned to at least one virtual physical object mapped to the icon includes a cross-sectional area orthogonal to the buoyancy field, and a cross-sectional area and a density of an area orthogonal to a direction of the gravity field, and

wherein the at least one virtual physical object mapped to the icon is located at a point at which a first force exerted by the buoyancy field and a second force exerted by the gravity field are in equilibrium.

9. The method of claim 1, wherein the UI object includes an indicator, and wherein at least one virtual physical object mapped to the indicator includes one physical object including the whole indicator or includes two physical objects having different attribute values and located at both ends of the indicator.

10. The method of claim 1, wherein the UI object includes a button constituting a virtual keyboard,
wherein an attribute value assigned to at least one virtual physical object mapped to the button determines a position of the button, and
wherein the attribute value is re-determined according to a pre-defined re-arrangement command.

11. The method of claim 1, wherein the UI object includes a button constituting a virtual keyboard,
wherein an attribute value assigned to at least one virtual physical object mapped to the button determines a size of the button, and
wherein the attribute value is changed such that a size thereof is gradually changed according to the number of input attempts of a user.

12. The method of claim 1, wherein the UI object includes a signal strength indication icon of an external communication node for transmitting and receiving a radio signal,
wherein the physical field includes a buoyancy directed to a center of a circle, wherein an attribute value assigned to at least one virtual physical entity mapped to the icon determines a distance between the center of the circle and the icon, and
wherein the attribute value is changed according to signal strength from the external communication node.

13. The method of claim 1, wherein the UI object includes a signal strength indication icon of an external communication node for transmitting and receiving a radio signal,
wherein an attribute value assigned to at least one virtual physical object mapped to the icon determines a size of the icon, and
wherein the attribute value is changed on the basis of at least one of the number of input attempts and the number of access attempts to the external communication node indicated by the icon.

14. The method of claim 1, wherein the UI object includes a UI object which overlaps on a home screen when the screen is locked,
wherein at least one virtual physical object mapped to the UI object has an attribute of a soft body and is shaken or pulled due to a collision with a rigid body, caused by a user input, the collision being due to a movement of the rigid body.

15. An electronic device arranged to implement a method of one of claims 1 to 14.

EP 2 738 660 A2

FIG.1

BUOYANCY
DIRECTION

PARENT UI
OBJECT
(210)

DENSITY
EQUILIBRIUM
POINT
(230)

Y-AXIS COMPONENT DENSITY
GRAPH

Y-AXIS
COMPONENT
DENSITY

CHILD UI
OBJECT
(220)

X-AXIS
COMPONENT
DENSITY

HIGH

LOW

BUOYANCY
DIRECTION

HIGH

LOW

X-AXIS COMPONENT DENSITY
GRAPH

FIG.2

VIRTUAL PHYSICAL SPACE(310)

CROSS-SECTIONAL
AREA:$A_y$

$F_{Gy}$

$y_2$

~320

DENSITY:$P_{cy}$

$y_1$

$F_{By}$

(0,0)
ORIGIN POINT ON
PHYSICAL ENGINE

# FIG.3

START

SET VIRTUAL PHYSICAL FIELD IN AT
LEAST ONE REGION IN SCREEN — 401

ASSIGN ATTRIBUTE VALUE INFLUENCED
BY PHYSICAL FIELD TO UI OBJECT
PRESENTED IN AT LEAST ONE REGION — 403

DISPLAY UI OBJECT ACCORDING TO
COORDINATE VALUE CALCULATED BY
PHYSICAL ENGINE — 405

CHANGE PROPERTY OF PHYSICAL FIELD
OR ATTRIBUTE VALUE OF UI OBJECT
ACCORDING TO USER'S MANIPULATION
OR CHANGE IN EXTERNAL ENVIRONMENT — 407

FIG.4

530

| TOUCH SCREEN (533) | EXTRA INPUT/ CONTROL UNIT (534) |
|---|---|
| ↕ | ↕ |
| TOUCH SCREEN CONTROLLER (531) | EXTRA INPUT CONTROLLER (532) |

520

PERIPHERAL INTERFACE (523)

540

COMMUNICATION SUB-SYSTEM

PROCESSOR (522)

MEMORY INTERFACE (521)

550

SENSING SUB-SYSTEM

CAMERA SUB-SYSTEM

560

510

| OPERATING SYSTEM MODULE (511) |
|---|
| GRAPHIC MODULE (512) |
| UI MODULE (513) |
| PHYSICAL ENGINE (514) |
| ⋮ |

FIG.5

PERIPHERAL INTERFACE
(523)

PHYSICAL
ENGINE
(624)

PROCESSOR
(522)

MEMORY
INTERFACE
(521)

620

OPERATING SYSTEM MODULE
(511)

GRAPHIC MODULE  (512)

UI MODULE  (513)

⋮

610

FIG.6

PERIPHERAL INTERFACE
(523)

UI
PROCESSOR
(724)

PROCESSOR
(522)

MEMORY
INTERFACE
(521)

720

710

OPERATING SYSTEM MODULE
(511)

GRAPHIC MODULE  (512)

PHYSICAL ENGINE  (514)

⋮

FIG.7

820

PERIPHERAL INTERFACE
(523)

UI
PROCESSOR
(724)

PHYSICAL
ENGINE
(624)

PROCESSOR
(522)

MEMORY
INTERFACE
(521)

810

OPERATING SYSTEM MODULE
(511)

GRAPHIC MODULE (512)

⋮

FIG.8

FIG.9A

FIG.9B

FIG.9C

FIG.10

INDICATOR (1110)

DENSITY $y_1$

DENSITY $y_2$

DENSITY $y_3$

DENSITY $y_4$

DENSITY $y_5$

DENSITY $x_1$  DENSITY $x_2$  DENSITY $x_3$  DENSITY $x_4$

FIG.11A

INDICATOR (1110)

DENSITY $x_1$

DENSITY $x_2$

DENSITY $x_3$

DENSITY $x_4$

DENSITY $y_1$  DENSITY $y_2$  DENSITY $y_3$  DENSITY $y_4$  DENSITY $y_5$

FIG.11B

PHYSICAL OBJECT(1211)

**FIG.12A**

PHYSICAL OBJECT A(1221)　　　　　　　　　　　PHYSICAL OBJECT B(1222)

**FIG.12B**

FIG.13

GRAVITY
FIELD
(1400)

OBJECT
RANGE(1421)

DISPLAY
RANGE(1422)

FIG.14

FIG.15

SCREEN PLANE (1610)

1620

FIG.16

$O_1$    $d_1$

$O_2$    $d_2$

$O_3$    $d_3$

FIG.17

FIG.18A

FIG.18B

FIG.19A

FIG.19B

'WORLD'
DEFINITION
(2010)

INITIALIZATION

{ SIGNAL
STRENGTH
OF
EACH AP }

PERIODIC
UPDATE

PHYSICAL
ENGINE
(2020)

PERIODIC
UPDATE

{ LAYOUT OF
OBJECT
INDICATING
AP }

FIG.20

2101

$d_{now} > d$
$p < p_w \rightarrow F < 0$

2102

$(i) d_{now} = d$
$p < p_w \rightarrow F > 0$

2103

$(i) d_{now} = d$
$p = p_w \rightarrow F = 0$

$d$

FIG.21

FIG.22

FIG.23A

FIG.23B

FIG.23C

FIG.24A

FIG.24B

FIG.25

2611
2612
previous
current
△x > 0

FIG.26A

2622
2621
current
previous
△x < 0

FIG.26B

FIG.27

FIG.28